# EUROPEAN PATENT APPLICATION

(11) **EP 4 807 512 A1**
(43) Date of publication of application: **16.09.2026**
(21) Application number: 24900919.2
(22) Date of filing: 18.11.2024
(51) Int. Cl.: G06F 3/0484, G06F 3/14, G06F 1/16, G06F 3/0481

(54) **ELECTRONIC DEVICE COMPRISING FLEXIBLE DISPLAY AND METHOD FOR OPERATING SAME**

(30) Priority: 08.12.2023 KR 20230177992; 18.01.2024 KR 20240007946
(71) Applicant: Samsung Electronics Co., Ltd., Suwon-si, Gyeonggi-do 16677 (KR)
(72) Inventor: YOON, Sangil, Suwon-si Gyeonggi-do 16677 (KR); KIM, Jeongseob, Suwon-si Gyeonggi-do 16677 (KR); IM, Byungjai, Suwon-si Gyeonggi-do 16677 (KR); JO, Yeonho, Suwon-si Gyeonggi-do 16677 (KR); HAN, Yonggil, Suwon-si Gyeonggi-do 16677 (KR)
(74) Representative: Gulde & Partner
(86) International application number: PCT/KR2024/018175
(87) International publication number: WO 2025/121732

(57) **Abstract**

According to an embodiment, the wearable electronic device may comprise a housing including a first housing and a second housing extending from the first housing. At least a part of the second housing may be flexible. The wearable electronic device may comprise a display disposed on the housing, at least one processor, and a memory for storing instructions. The instructions, when executed by the at least one processor, cause the wearable electronic device to display a screen in a portrait orientation, among first and second areas of the display, in the first area without displaying the screen in the second area extending from the first area, display a screen in the portrait orientation in the first and second areas of the display, display a screen in a landscape orientation in the first area of the display without displaying a screen in the second area of the display, or display a screen in the landscape orientation in the first and second areas of the display. At least a part of the first area of the display may correspond to the first housing. At least a part of the second area of the display may correspond to the second housing. Various other embodiments are also possible.

## Description

### [Technical Field]

The disclosure relates to an electronic device including a flexible display and a method of operating the same according to an embodiment.

### [Background Art]

A wearable electronic device (e.g., a smart watch) may display various additional information (e.g., battery information, sensor information, schedule information) together, not limited to merely displaying time through a watch face screen.

A smart watch has limitations in the size of a display. In a state in which a watch face screen of a smart watch is displayed, in order to check additional information (e.g., detailed information) about additional information included in the watch face screen, the watch face screen may be switched to an application screen performing the corresponding function, and accordingly, the user may not be able to simultaneously check the time at least temporarily.

Further, in order to change the additional information included in the watch face screen to other additional information, a user interface is provided in a manner in which the user enters a separate setting menu, selects other additional information supported in a menu list, and returns to the watch face screen.

The information is provided as a related art for the purpose of helping to understand the disclosure. No claim or determination is made as to whether any of the foregoing is applicable as background art in relation to the disclosure.

### [Detailed Description of the Invention]

### [Technical Solution]

According to an embodiment, a wearable electronic device may include a housing including a first housing and a second housing extending from the first housing. At least a portion of the second housing may be flexible. The wearable electronic device may include a display disposed in the housing, at least one processor, and memory storing instructions. The instructions, when executed by the at least one processor, may be configured to cause the wearable electronic device to display, among a first area and a second area of the display, a screen in a portrait orientation on the first area without displaying a screen on the second area extending from the first area, display a screen in the portrait orientation on the first area and the second area of the display, display a screen in a landscape orientation on the first area of the display without displaying a screen on the second area of the display, or display a screen in the landscape orientation on the first area and the second area of the display. At least a portion of the first area of the display may correspond to the first housing. At least a portion of the second area of the display may correspond to the second housing.

According to an embodiment, a method of operating a wearable electronic device may include performing one operation among an operation of displaying, among a first area and a second area of a display of the wearable electronic device, a screen in a portrait orientation on the first area without displaying a screen on the second area extending from the first area, an operation of displaying a screen in the portrait orientation on the first area and the second area of the display, an operation of displaying a screen in a landscape orientation on the first area of the display without displaying a screen on the second area of the display, or an operation of displaying a screen in the landscape orientation on the first area and the second area of the display. At least a portion of the first area of the display may correspond to a first housing of the wearable electronic device. At least a portion of the second area of the display may correspond to a second housing extending from the first housing.

According to an embodiment, a storage medium stores computer-readable instructions that, when executed by at least one processor of a wearable electronic device, may cause the wearable electronic device to perform at least one operation. The at least one operation may include performing one operation among an operation of displaying, among a first area and a second area of a display of the wearable electronic device, a screen in a portrait orientation on the first area without displaying a screen on the second area extending from the first area, an operation of displaying a screen in the portrait orientation on the first area and the second area of the display, an operation of displaying a screen in a landscape orientation on the first area of the display without displaying a screen on the second area of the display, or an operation of displaying a screen in the landscape orientation on the first area and the second area of the display. At least a portion of the first area of the display may correspond to a first housing of the wearable electronic device. At least a portion of the second area of the display may correspond to a second housing extending from the first housing.

### [Brief Description of Drawings]

FIG. 1 is a block diagram illustrating an electronic device in a network environment according to an embodiment.
FIG. 2 is a view illustrating an electronic device, according to an embodiment.
FIG. 3A is a view illustrating a screen display method of an electronic device according to an embodiment.
FIG. 3B is a view illustrating a screen display method of an electronic device according to an embodiment.
FIG. 4 is a block diagram illustrating an electronic device, according to an embodiment.
FIG. 5 is a flowchart illustrating a method of operating an electronic device according to an embodiment.
FIG. 6 is a view illustrating replacement of an additional object according to an embodiment.
FIG. 7 is a view illustrating editing of an additional object according to an embodiment.
FIG. 8 is a view illustrating replacement of an additional object and transition of a state according to an embodiment.
FIG. 9 is a view illustrating addition of an additional object according to an embodiment.
FIG. 10 is a view illustrating deletion of an additional object according to an embodiment.
FIG. 11 is a view illustrating simple information and detailed information according to an embodiment.
FIG. 12 is a view illustrating simple information and detailed information according to an embodiment.
FIG. 13 is a view illustrating a shape in which additional information is displayed according to an embodiment.
FIG. 14 is a view illustrating a shape in which additional information is displayed according to an embodiment.
FIG. 15 is a view illustrating a shape in which additional information is displayed according to an embodiment.
FIG. 16 is a view illustrating a background display method according to an embodiment.
FIG. 17 is a view illustrating a background color according to an embodiment.
FIG. 18 is a view illustrating a background color according to an embodiment.
FIG. 19 is a view illustrating a display attribute of a screen according to an embodiment.
FIG. 20 is a view illustrating a screen display method according to an embodiment.
FIG. 21 is a view illustrating an arrangement position of an additional object according to an embodiment.
FIG. 22 is a view illustrating an arrangement position of an additional object according to an embodiment.
FIG. 23 is a view illustrating an arrangement position of an additional object according to an embodiment.
FIG. 24 is a view illustrating a priority of arrangement of an additional object according to an embodiment.

### [Mode for Carrying out the Invention]

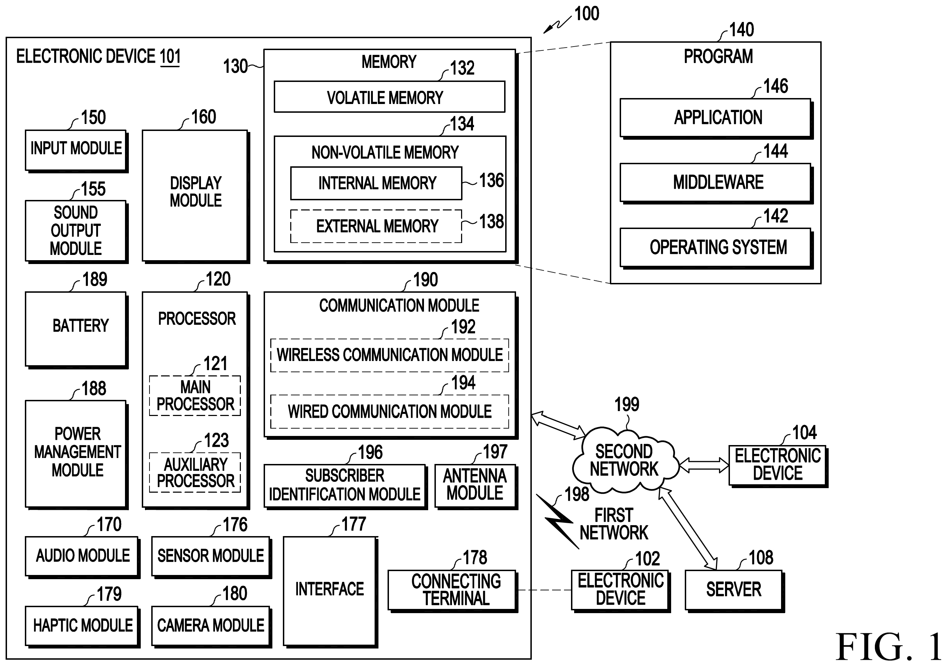

FIG. 1 is a block diagram illustrating an electronic device in a network environment, according to an embodiment.

Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., the program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing recordings The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operation state (e.g., power or temperature) of the electronic device 101 or an external environmental state (e.g., the user's state), and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wiredly) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wiredly) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

According to an embodiment, the processor 120 of the electronic device 101 may be referred to as a controller 120. An operation of the electronic device 101 according to an embodiment may be controlled by the processor 120 of the electronic device 101. The electronic device 101 performing a specific operation may mean that the electronic device 101 or a component included in the electronic device 101 is controlled by the processor 120 of the electronic device 101. The processor 120 may be circuitry performing processing. The electronic device 101 may include one or more processors 120. Operation(s) of the electronic device 101 may be processed by one processor 120. Some of operations of the electronic device 101 may be processed by some of a plurality of processors 120, and other operations of the electronic device 101 may be processed by other processors 120 among the plurality of processors 120. Hereinafter, even when the processor 120 is implemented as a plurality of processors, description is made as "an operation of the electronic device 101" or "an operation of the processor 120" for convenience of description. According to an embodiment, the memory 130 may include instructions configured to cause at least one operation. The instructions, when executed by the processor 120 of the electronic device 101, may cause the electronic device 101 to perform at least one operation. The electronic device 101 may include one or more memories 130. Hereinafter, "memory 130" may be one memory 130 or a plurality of memories 130. Instructions may be stored in one memory 130. Some of instructions may be stored in some of a plurality of memories 130, and other instructions may be stored in other memories 130 among the plurality of memories 130. Hereinafter, even when the memory 130 is implemented as a plurality of memories, description is made as "memory 130" for convenience of description. According to an embodiment, a computer readable storage medium storing instructions configured to cause at least one operation may be provided.

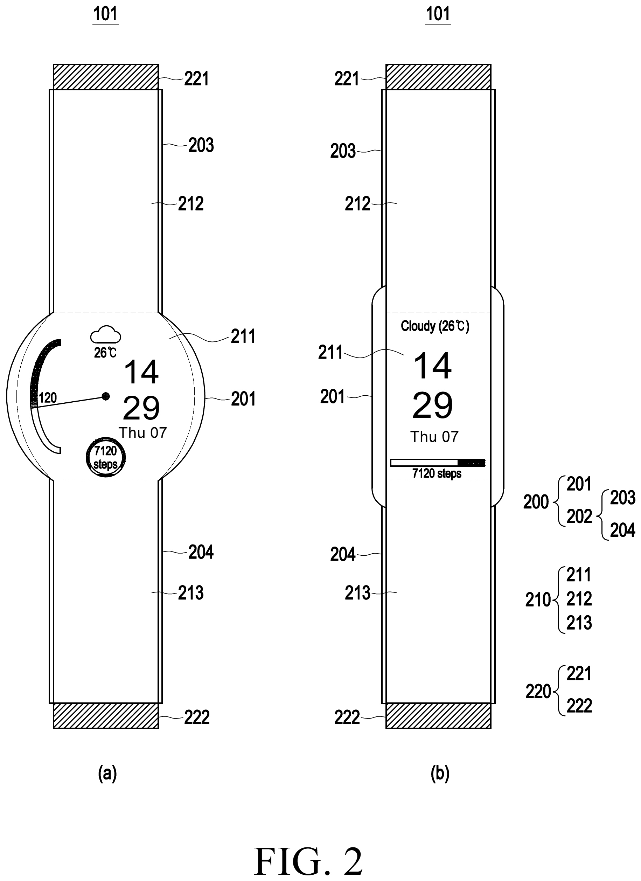

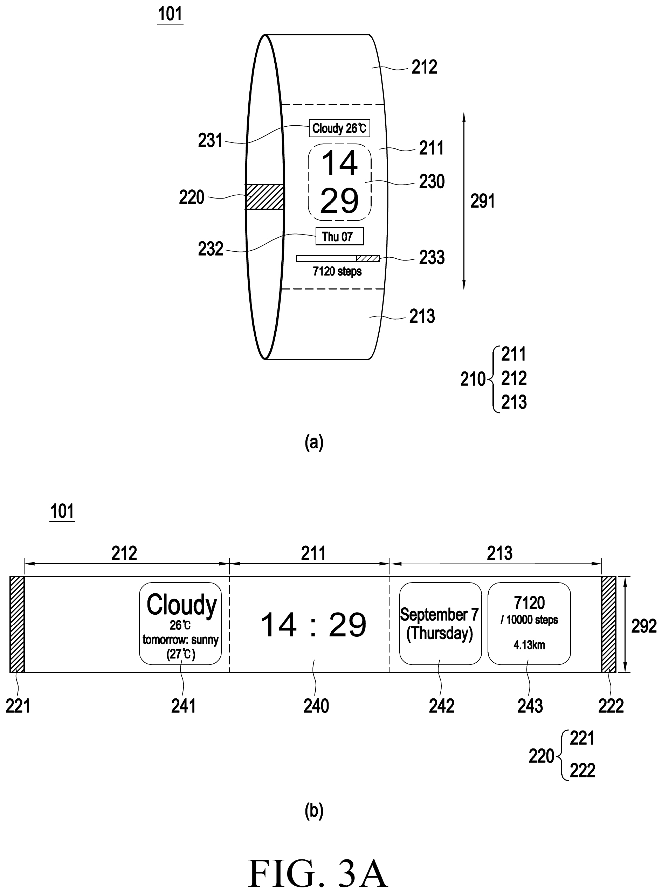

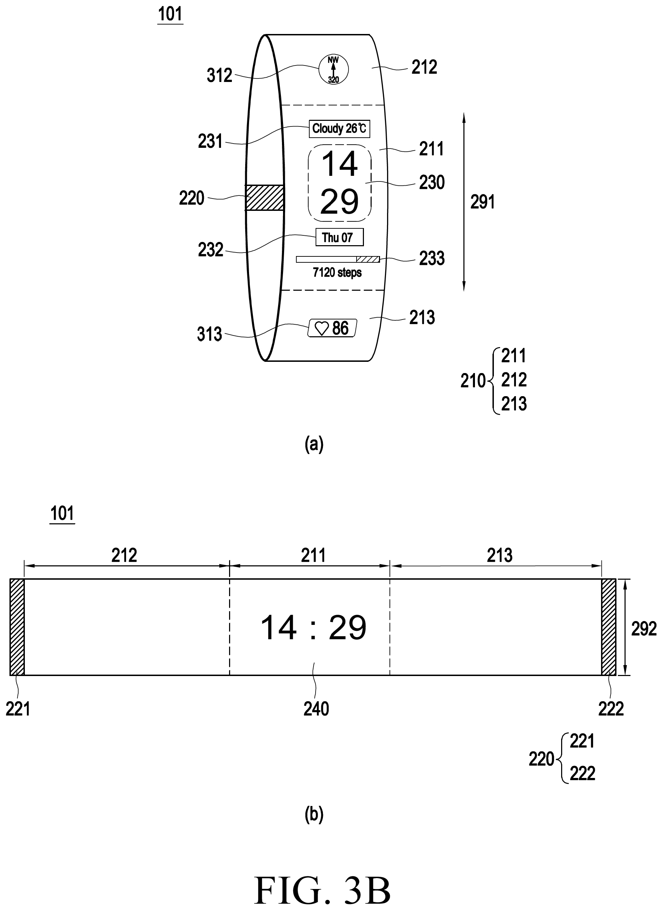

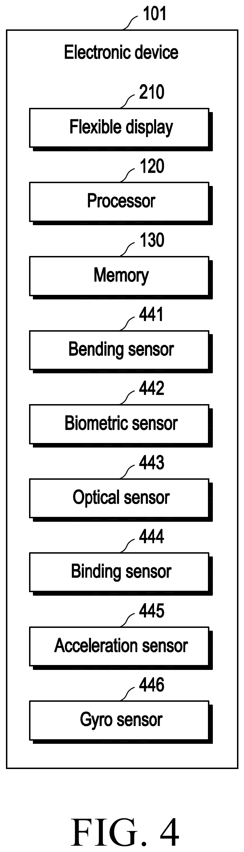

FIG. 2 is a view illustrating an electronic device, according to an embodiment. FIG. 3A is a view illustrating a screen display method of an electronic device according to an embodiment. FIG. 3B is a view illustrating a screen display method of an electronic device according to an embodiment. FIG. 4 is a block diagram illustrating an electronic device, according to an embodiment.

According to an embodiment, the electronic device 101 of FIG. 2 may be the electronic device 101 of FIG. 1. The electronic device 101 of FIG. 2 may include at least one of the configurations of the electronic device 101 of FIG. 1. The electronic device 101 of FIG. 2 may not include at least one of the configurations of the electronic device 101 of FIG. 1. According to an embodiment, the electronic device 101 may be a wearable device (e.g., a smart watch). The electronic device 101 may be worn by a user.

According to an embodiment, referring to FIG. 2, the electronic device 101 may include a main body 200 (e.g., a body portion). According to an embodiment, a processor 120 and memory 130 of the electronic device 101 may be disposed in the main body 200. The electronic device 101 may include a flexible display 210 (e.g., a display of a display module 160). At least a portion of the flexible display 210 may be disposed on the main body 200. According to an embodiment, as illustrated in (a) of FIG. 2, at least a portion of the main body 200 of the electronic device 101 may have a rounded shape. For example, an area of the flexible display 210 corresponding to the main body 200 may have a rounded shape. According to an embodiment, as illustrated in (b) of FIG. 2, at least a portion of the main body 200 of the electronic device 101 may have an angular shape. For example, an area of the flexible display 210 corresponding to the main body 200 may have an angular shape. Depending on the shape of the main body 200, the shape of the area of the flexible display 210 corresponding to the main body 200 may vary. Depending on the shape of the area of the flexible display 210 corresponding to the main body 200, the shape of an object displayed in the corresponding area may vary. FIG. 2 is merely an example of the shapes of the main body 200 and the flexible display 210 of the electronic device 101, and the shapes are not limited thereto. Although not illustrated in FIG. 2, the electronic device 101 may include a support portion (e.g., a housing) extending from the main body 200 to support the flexible display 210.

According to an embodiment, referring to FIG. 2, the electronic device 101 may include a binding portion 220. For example, the binding portion 220 may include a first binding portion 221 and a second binding portion 222. The first binding portion 221 and the second binding portion 222 may be bound to each other. The binding portion 220 may have a separated form as illustrated in FIG. 2, but the shape and material of the binding portion 220 are not limited thereto.

According to an embodiment, referring to FIG. 2, the flexible display 210 may include a first area 211 and a second area 212, 213. The first area 211 may be a main area (e.g., a watch face area). For example, the first area 211 may correspond to an area where an hour hand and a minute hand are disposed in a general watch. The second area 212, 213 may be a sub area (e.g., a strap area). For example, the second area 212, 213 may correspond to an area where a strap is provided in a general watch. The second area 212, 213 may include a first sub area 212 and a second sub area 213. The first sub area 212 may extend from a first end of the first area 211. The second sub area 213 may extend from a second end of the first area 211. According to an embodiment, the first area 211, the first sub area 212, and the second sub area 213 of the flexible display 210 may be implemented as a single display module. According to an embodiment, the first area 211, the first sub area 212, and the second sub area 213 of the flexible display 210 may be implemented as respective display modules and may be configured to be connected to each other.

According to an embodiment, referring to FIG. 3A, the electronic device 101 may be bent into a curved shape. For example, the flexible display 210 may be bent into a curved shape.

According to an embodiment, a state of the electronic device 101 (or a state of the flexible display 210) may include a "first state" and a "second state". The electronic device 101 may identify the state (e.g., the first state or the second state) of the electronic device 101 (or the flexible display 210) using at least one sensor (e.g., 176 of FIG. 1). The state of the electronic device 101 (or the state of the flexible display 210) may be a state related to whether the electronic device 101 is worn on a wrist of a user. The state of the electronic device 101 (or the state of the flexible display 210) may be a state related to a bending angle of the electronic device 101 (or the flexible display 210).

According to an embodiment, (a) of FIG. 3A may represent a "first state" of the electronic device 101 (or the flexible display 210). The "first state" may be a bent state. The "first state" may be a worn state. Hereinafter, the "first state" may be a bent state of the electronic device 101 (e.g., the flexible display 210 of the electronic device 101) or a worn state of the electronic device 101.

According to an embodiment, (b) of FIG. 3A may represent a "second state" of the electronic device 101 (or the flexible display 210). The "second state" may be a state other than the first state. For example, the "second state" may be an unbent state. For example, the "second state" may be an unfolded state. For example, the "second state" may be a non-worn state. Hereinafter, the "second state" may be an unbent state of the electronic device 101 (e.g., the flexible display 210 of the electronic device 101), an unfolded state of the electronic device 101 (e.g., the flexible display 210 of the electronic device 101), or a non-worn state of the electronic device 101.

According to an embodiment, referring to FIG. 4, the electronic device 101 may include at least one sensor (e.g., at least one of 441, 442, 443, 444, 445, 446) (e.g., at least one sensor included in the sensor module 176). A position where the at least one sensor (e.g., at least one of 441, 442, 443, 444, 445, 446) (e.g., at least one sensor included in the sensor module 176) is disposed is not limited. For example, the electronic device 101 may include a bending sensor 441. The bending sensor 441 may be a sensor sensing a bending angle of the electronic device 101 (or the flexible display 210). The "bending angle" may be a degree to which the electronic device 101 (or the flexible display 210) is bent. The electronic device 101 may sense the bending angle of the electronic device 101 (or the flexible display 210) using the bending sensor 441. For example, the electronic device 101 may identify the first state (e.g., a worn state or a bent state) (e.g., (a) of FIG. 3A) of the electronic device 101 (or the flexible display 210) based on identifying that the bending angle of the electronic device 101 (or the flexible display 210) is greater than or equal to a reference value using the bending sensor 441. For example, the electronic device 101 may identify the second state (e.g., an unbent state, an unfolded state, or a non-worn state) (e.g., (b) of FIG. 3A) of the electronic device 101 (or the flexible display 210) based on identifying that the bending angle of the electronic device 101 (or the flexible display 210) is less than the reference value using the bending sensor 441. Although (b) of FIG. 3A illustrates a completely unfolded state, the second state is a state other than the first state, and the second state may include not only a state in which the bending angle of the electronic device 101 (or the flexible display 210) is 0, but also a state in which the bending angle of the electronic device 101 (or the flexible display 210) is less than a reference value (e.g., an angle greater than 0 degrees). For example, the electronic device 101 may include a biometric sensor 442. The biometric sensor 442 may be a sensor sensing a biometric signal of a user. For example, the electronic device 101 may identify the first state (e.g., a worn state or a bent state) (e.g., (a) of FIG. 3A) of the electronic device 101 (or the flexible display 210) based on identifying a biometric signal of the user using the biometric sensor 442. For example, the electronic device 101 may identify the second state (e.g., an unbent state, an unfolded state, or a non-worn state) (e.g., (b) of FIG. 3A) of the electronic device 101 (or the flexible display 210) based on identifying an absence of the biometric signal of the user using the biometric sensor 442. For example, the electronic device 101 may include an optical sensor 443. The optical sensor 443 may be a sensor sensing whether the user is in proximity using light. For example, the electronic device 101 may identify the first state (e.g., a worn state or a bent state) (e.g., (a) of FIG. 3A) of the electronic device 101 (or the flexible display 210) based on identifying proximity of the electronic device 101 and the user using the optical sensor 443. For example, the electronic device 101 may identify the second state (e.g., an unbent state, an unfolded state, or a non-worn state) (e.g., (b) of FIG. 3A) of the electronic device 101 (or the flexible display 210) based on identifying that the electronic device 101 and the user are not in proximity using the optical sensor 443. For example, the electronic device 101 may include a binding sensor 444. The binding sensor 444 may be a sensor sensing whether the binding portion 220 is bound. For example, the electronic device 101 may identify the first state (e.g., a worn state or a bent state) (e.g., (a) of FIG. 3A) of the electronic device 101 (or the flexible display 210) based on identifying binding of the binding portion 220 using the binding sensor 444. For example, the electronic device 101 may identify the second state (e.g., an unbent state, an unfolded state, or a non-worn state) (e.g., (b) of FIG. 3A) of the electronic device 101 (or the flexible display 210) based on identifying that the binding portion 220 is not bound using the binding sensor 444. For example, the electronic device 101 may include an acceleration sensor 445 or a gyro sensor 446. The acceleration sensor 445 and the gyro sensor 446 may be sensors sensing movement of the electronic device 101. For example, the electronic device 101 may identify the first state (e.g., a worn state or a bent state) (e.g., (a) of FIG. 3A) of the electronic device 101 (or the flexible display 210) based on identifying movement of the electronic device 101 using the acceleration sensor 445 or the gyro sensor 446. For example, the electronic device 101 may identify the second state (e.g., an unbent state, an unfolded state, or a non-worn state) (e.g., (b) of FIG. 3A) of the electronic device 101 (or the flexible display 210) based on identifying that there is no movement of the electronic device 101 using the acceleration sensor 445 or the gyro sensor 446. For example, the electronic device 101 may also identify the state (e.g., the first state or the second state) of the electronic device 101 (or the flexible display 210) using at least two of the at least one sensor (e.g., at least one of 441, 442, 443, 444, 445, 446) (e.g., at least one sensor included in the sensor module 176) together.

According to an embodiment, referring to FIG. 3A, the electronic device 101 (e.g., the processor 120) may display a screen based on the state (e.g., the first state or the second state) of the electronic device 101 (or the flexible display 210). For example, the electronic device 101 may display a first screen (e.g., the screen of (a) of FIG. 3A) in the first state. For example, the electronic device 101 may display a second screen (e.g., the screen of (b) of FIG. 3A) in the second state. For example, the electronic device 101 may display the second screen (e.g., the screen of (b) of FIG. 3A) based on the state of the electronic device 101 (or the flexible display 210) being switched from the first state to the second state while displaying the first screen (e.g., the screen of (a) of FIG. 3A) in the first state. For example, the electronic device 101 may display the first screen (e.g., the screen of (a) of FIG. 3A) based on the state of the electronic device 101 (or the flexible display 210) being switched from the second state to the first state while displaying the second screen (e.g., the screen of (b) of FIG. 3A) in the second state. For example, in the first screen (e.g., the screen of (a) of FIG. A) of the first state, a time object (e.g., 230) indicating time information and an additional object (e.g., 231, 232, 233) indicating additional information may be displayed on the first area 211 of the flexible display 210. For example, in the second screen (e.g., the screen of (b) of FIG. 3A) of the second state, a time object (e.g., 240) indicating time information may be displayed on the first area 211 of the flexible display 210, and an additional object (e.g., 241, 242, 243) indicating additional information may be displayed on the second area 212, 213 of the flexible display 210. Time information may be information corresponding to time. A time object (e.g., 230, 240) may be an object indicating time information. Additional information may be information other than time information. An additional object (e.g., 231, 232, 233, 241, 242, 243) may be an object indicating additional information. For example, the additional information may include information related to barometric pressure, battery, AI assistant, control of a wireless earphone, calculator, compass, date, event, media control, message, moon phase, connected phone, recent app, schedule, alarm, chronograph, stopwatch, timer, world time, date and weather, detailed weather, perceived temperature, temperature, fine dust, ultrafine dust, sunrise, sunset, ultraviolet index, weather1, weather2, step count, location, direction, water intake, stress index, or heart rate. The arrangement of objects included in the first screen (e.g., the screen of (a) of FIG. 3A) and the second screen (e.g., the screen of (b) of FIG. 3A) is described in detail as follows.

According to an embodiment, referring to (a) of FIG. 3A, the first screen (e.g., the screen of (a) of FIG. 3A) of the first state may include a first time object 230 indicating time information. The first screen (e.g., the screen of (a) of FIG. 3A) of the first state may include a first additional object 231 indicating first additional information (e.g., weather information). The first screen (e.g., the screen of (a) of FIG. 3A) of the first state may include a second additional object 232 indicating second additional information (e.g., date information). The first screen (e.g., the screen of (a) of FIG. 3A) of the first state may include a third additional object 233 indicating third additional information (e.g., step count information). The first screen (e.g., the screen of (a) of FIG. 3A) of the first state may be displayed on the first area 211 of the flexible display 210. For example, in the first screen (e.g., the screen of (a) of FIG. 3A) of the first state, the first time object 230 indicating time information may be displayed on the first area 211 of the flexible display 210. For example, in the first screen (e.g., the screen of (a) of FIG. 3A) of the first state, the first additional object 231 indicating the first additional information (e.g., weather information) may be displayed on the first area 211 of the flexible display 210. For example, in the first screen (e.g., the screen of (a) of FIG. 3A) of the first state, the second additional object 232 indicating the second additional information (e.g., date information) may be displayed on the first area 211 of the flexible display 210. For example, in the first screen (e.g., the screen of (a) of FIG. 3A) of the first state, the third additional object 233 indicating the third additional information (e.g., step count information) may be displayed on the first area 211 of the flexible display 210. The first screen (e.g., the screen of (a) of FIG. 3A) of the first state may be displayed in a first direction 291. For example, the first direction 291 may be a direction in which the upper and lower portions of the screen (e.g., the screen of (a) of FIG. 3A) are disposed in a length direction of the flexible display 210.

According to an embodiment, referring to (b) of FIG. A, the second screen (e.g., the screen of (b) of FIG. 3A) of the second state may include a second time object 240 indicating time information. The second screen (e.g., the screen of (b) of FIG. 3A) of the second state may include a fourth additional object 241 indicating the first additional information (e.g., weather information). The fourth additional object 241 of the second screen (e.g., the screen of (b) of FIG. 3A) of the second state may correspond to the first additional object 231 of the first screen (e.g., the screen of (a) of FIG. 3A) of the first state. The second screen (e.g., the screen of (b) of FIG. 3A(b) of FIG. 3A) of the second state may include a fifth additional object 242 indicating the second additional information (e.g., date information). The fourth additional object 242 of the second screen (e.g., the screen of (b) of FIG. 3A) of the second state may correspond to the second additional object 232 of the first screen (e.g., the screen of (a) of FIG. 3A) of the first state. The second screen (e.g., the screen of (b) of FIG. 3A) of the second state may include a sixth additional object 243 indicating the third additional information (e.g., step count information). The sixth additional object 243 of the second screen (e.g., the screen of (b) of FIG. 3A) of the second state may correspond to the third additional object 233 of the first screen (e.g., the screen of (a) of FIG. 3A) of the first state. The second screen (e.g., the screen of (b) of FIG. 3A) of the second state may be displayed on the first area 211 and the second area 212 and/or 213 of the flexible display 210. For example, in the second screen (e.g., the screen of (b) of FIG. 3A) of the second state, the second time object 240 indicating time information may be displayed on the first area 211 of the flexible display 210. For example, in the second screen (e.g., the screen of (b) of FIG. 3A) of the second state, the fourth additional object 241 indicating the first additional information (e.g., weather information) may be displayed on the second area (e.g., the first sub area 212) of the flexible display 210. For example, in the second screen (e.g., the screen of (b) of FIG. 3A) of the second state, the fifth additional object 242 indicating the second additional information (e.g., date information) may be displayed on the second area (e.g., the second sub area 213) of the flexible display 210. For example, in the second screen (e.g., the screen of (b) of FIG. 3A) of the second state, the sixth additional object 243 indicating the third additional information (e.g., step count information) may be displayed on the second area (e.g., the second sub area 213) of the flexible display 210. The second screen (e.g., the screen of (b) of FIG. 3A) of the second state may be displayed in a second direction 292. The second direction 292 may be different from the first direction 291. For example, the second direction 292 may be a direction in which the left and right of the screen (e.g., the screen of (b) of FIG. A) are disposed in the length direction of the flexible display 210.

Referring to FIG. 3A and FIG. 3B, according to an embodiment, the electronic device 101 (e.g., the processor 120) may display a screen based on the state (e.g., the first state or the second state) of the electronic device 101 (or the flexible display 210) and a user setting. For example, referring to (a) of FIG. 3A, the electronic device 101 (e.g., the processor 120) may display, among the first area 211 and the second area 212, 213 of the display 160, 210, a screen in a portrait orientation on the first area 211 without displaying a screen on the second area 212, 213 extending from the first area 211. For example, the electronic device 101 (e.g., the processor 120) may display, based on the first state and a user setting (e.g., a first user setting), the screen in a portrait orientation on the first area 211 without displaying a screen on the second area 212, 213 of the display 160, 210. For example, the first user setting may be a setting causing a screen to be displayed only on the first area 211 in a portrait orientation in the first state. For example, referring to (a) of FIG. 3B, the electronic device 101 (e.g., the processor 120) may display a screen in a portrait orientation on the first area 211 and the second area 212, 213 of the display 160, 210. For example, the electronic device 101 (e.g., the processor 120) may display, based on the first state and a user setting (e.g., a second user setting), a screen in a portrait orientation on the first area 211 and the second area 212, 213 of the display 160, 210. For example, the second user setting may be a setting causing a screen to be displayed on the first area 211 and the second area 212, 213 in a portrait orientation in the first state. For example, referring to (b) of FIG. 3A, the electronic device 101 (e.g., the processor 120) may display a screen in a landscape orientation on the first area 211 and the second area 212, 213 of the display 160, 210. For example, the electronic device 101 (e.g., the processor 120) may display, based on the second state and a user setting (e.g., a third user setting), a screen in a landscape orientation on the first area 211 and the second area 212, 213 of the display 160, 210. For example, the third user setting may be a setting causing a screen to be displayed on the first area 211 and the second area 212, 213 in a landscape orientation in the second state. For example, referring to (b) of FIG. 3B, the electronic device 101 (e.g., the processor 120) may display a screen in a landscape orientation on the first area 211 of the display 160, 210 without displaying a screen on the second area 212, 213 of the display 160, 210. For example, the electronic device 101 (e.g., the processor 120) may display, based on the second state and a user setting (e.g., a fourth user setting), a screen in a landscape orientation on the first area 211 of the display 160, 210 without displaying a screen on the second area 212, 213 of the display 160, 210. For example, the fourth user setting may be a setting causing a screen to be displayed only on the first area 211 in a landscape orientation in the second state.

The descriptions of FIG. 2, FIG. 3A, FIG. 3B, and FIG. 4 may be applied to the embodiments described below. When describing the embodiments below, portions overlapping the descriptions of FIG. 2, FIG. 3A, and FIG. 4 may be omitted. Parts omitted in the description of each drawing or each embodiment may be understood by referring to the descriptions of other drawings or embodiments.

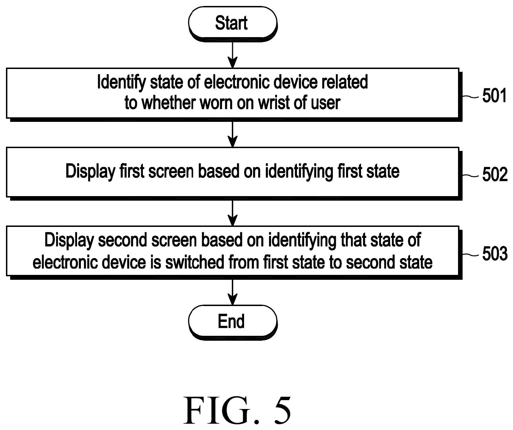

FIG. 5 is a flowchart illustrating a method of operating an electronic device according to an embodiment. FIG. 5 may be described with reference to the above described embodiments and embodiments described below.

At least some operations of FIG. 5 may be omitted. The order of operations in FIG. 5 may be changed. Operations other than those in FIG. 5 may be performed before, while, or after performing the operations of FIG. 5.

Referring to FIG. 5, in an operation 501, according to an embodiment, the electronic device 101 (e.g., the processor 120) may identify a state (e.g., the first state or the second state) of the electronic device 101 (or the flexible display 210) related to whether the electronic device 101 is worn on a wrist of a user. The first state may be a worn state or a bent state. The second state may be an unbent state, an unfolded state, or a non-worn state. For example, the electronic device 101 may identify the first state (e.g., a worn state or a bent state) (e.g., (a) of FIG. 3A) of the electronic device 101 (or the flexible display 210) based on identifying that the bending angle of the electronic device 101 (or the flexible display 210) is greater than or equal to a reference value using the bending sensor 441. For example, the electronic device 101 may identify the second state (e.g., an unbent state, an unfolded state, or a non-worn state) (e.g., (b) of FIG. 3A) of the electronic device 101 (or the flexible display 210) based on identifying that the bending angle of the electronic device 101 (or the flexible display 210) is less than the reference value using the bending sensor 441. For example, the electronic device 101 may identify the first state (e.g., a worn state or a bent state) (e.g., (a) of FIG. 3A) of the electronic device 101 (or the flexible display 210) based on identifying a biometric signal of the user using the biometric sensor 442. For example, the electronic device 101 may identify the second state (e.g., an unbent state, an unfolded state, or a non-worn state) (e.g., (b) of FIG. 3A) of the electronic device 101 (or the flexible display 210) based on identifying an absence of the biometric signal of the user using the biometric sensor 442. For example, the electronic device 101 may identify the first state (e.g., a worn state or a bent state) (e.g., (a) of FIG. 3A) of the electronic device 101 (or the flexible display 210) based on identifying proximity of the electronic device 101 and the user using the optical sensor 443. For example, the electronic device 101 may identify the second state (e.g., an unbent state, an unfolded state, or a non-worn state) (e.g., (b) of FIG. 3A) of the electronic device 101 (or the flexible display 210) based on identifying that the electronic device 101 and the user are not in proximity using the optical sensor 443. For example, the electronic device 101 may identify the first state (e.g., a worn state or a bent state) (e.g., (a) of FIG. 3A) of the electronic device 101 (or the flexible display 210) based on identifying binding of the binding portion 220 using the binding sensor 444. For example, the electronic device 101 may identify the second state (e.g., an unbent state, an unfolded state, or a non-worn state) (e.g., (b) of FIG. 3A) of the electronic device 101 (or the flexible display 210) based on identifying that the binding portion 220 is not bound using the binding sensor 444. For example, the electronic device 101 may identify the first state (e.g., a worn state or a bent state) (e.g., (a) of FIG. 3A) of the electronic device 101 (or the flexible display 210) based on identifying movement of the electronic device 101 using the acceleration sensor 445 or the gyro sensor 446. For example, the electronic device 101 may identify the second state (e.g., an unbent state, an unfolded state, or a non-worn state) (e.g., (b) of FIG. 3A) of the electronic device 101 (or the flexible display 210) based on identifying that there is no movement of the electronic device 101 using the acceleration sensor 445 or the gyro sensor 446. For example, the electronic device 101 may also identify the state (e.g., the first state or the second state) of the electronic device 101 (or the flexible display 210) using at least two of the at least one sensor (e.g., at least one of 441, 442, 443, 444, 445, 446) (e.g., at least one sensor included in the sensor module 176) together.

In an operation 502, according to an embodiment, the electronic device 101 (e.g., the processor 120) may display a first screen (e.g., (a) of FIG. 3A) based on identifying the first state (e.g., a worn state or a bent state).

In an operation 503, according to an embodiment, the electronic device 101 (e.g., the processor 120) may display a second screen (e.g., (b) of FIG. 3A) based on identifying that the state of the electronic device 101 (or the flexible display 210) is switched from the first state (e.g., a worn state or a bent state) to the second state (e.g., an unbent state, an unfolded state, or a non-worn state). According to an embodiment, the electronic device 101 (e.g., the processor 120) may display the first screen (e.g., (a) of FIG. 3A) based on identifying that the state of the electronic device 101 (or the flexible display 210) is switched from the second state (e.g., an unbent state, an unfolded state, or a non-worn state) to the first state (e.g., a worn state or a bent state).

The operation 502 and the operation 503 are described for each piece of information with reference to FIG. 3A as follows.

For example, referring to FIG. 3A, the electronic device 101 (e.g., the processor 120) may display the first screen (e.g., the screen of (a) of FIG. 3A) including the first time object 230 indicating time information in the first state. The first time object 230 may be displayed on the first area 211 in the first direction 291. The electronic device 101 may replace the first time object 230 indicating time information with a second time object 240 indicating time information based on the state of the electronic device 101 (or the flexible display 210) being switched from the first state to the second state, and display the second screen (e.g., the screen of (b) of FIG. 3A) including the second time object 240. The electronic device 101 may replace the second time object 240 indicating time information with the first time object 230 indicating time information based on the state of the electronic device 101 (or the flexible display 210) being switched from the second state to the first state, and display the first screen (e.g., the screen of (a) of FIG. 3A) including the first time object 230. Replacement of a time object may be stopping display of one time object and displaying another time object. In this case, a position where one time object is displayed and a position where another time object is displayed may be the same or different. The second time object 240 may be displayed on the first area 211 in the second direction 292. The first time object 230 and the second time object 240 may indicate the same time information. According to an embodiment, as illustrated in FIG. 3A, the arrangement of an object(s) included in the first time object 230 (e.g., the arrangement of an object indicating an hour and an object indicating a minute) and the arrangement of an object(s) included in the second time object 240 may be different. According to an embodiment, the arrangement of the object(s) of the first time object 230 and the arrangement of the object(s) of the second time object 240 may be the same. According to an embodiment, a display direction (e.g., the first direction 291) of the first time object 230 and a display direction (e.g., the second direction 291) of the second time object 240 may be different. According to an embodiment, the display direction of the first time object 230 and the display direction of the second time object 240 may be the same. For example, (b) of FIG. 3A is an embodiment illustrating display in the second direction 292, but the electronic device 101 may also display objects in the first direction 291 according to rotation of the electronic device 101 in the second state. In other words, each of the objects 240, 241, 242, 243 of (b) of FIG. 3A may be displayed in a direction rotated 90 degrees clockwise (or counterclockwise) according to rotation of the electronic device 101 in the second state.

The operation 502 and the operation 503 are further described for each piece of information with reference to FIG. 3A as follows.

For example, referring to FIG. 3A, the electronic device 101 (e.g., the processor 120) may display the first screen (e.g., the screen of (a) of FIG. 3A) including the first additional object 231 indicating the first additional information (e.g., weather information) in the first state. The first additional object 231 may be displayed on the first area 211 in the first direction 291. The electronic device 101 may replace the first additional object 231 indicating the first additional information (e.g., weather information) with a fourth additional object 241 indicating the first additional information (e.g., weather information) based on the state of the electronic device 101 (or the flexible display 210) being switched from the first state to the second state, and display the second screen (e.g., the screen of (b) of FIG. 3A) including the fourth additional object 241. The electronic device 101 may replace the fourth additional object 241 indicating the first additional information (e.g., weather information) with the first additional object 231 indicating the first additional information (e.g., weather information) based on the state of the electronic device 101 (or the flexible display 210) being switched from the second state to the first state, and display the first screen (e.g., the screen of (a) of FIG. 3A) including the first additional object 231. Replacement of an additional object may be stopping display of one additional object and displaying another additional object. In this case, a position where one additional object is displayed and a position where another additional object is displayed may be the same or different. The fourth additional object 241 may be displayed on the second area (e.g., the first sub area 212) in the second direction 292. The first additional object 231 and the fourth additional object 241 may indicate the same first additional information (e.g., weather information). According to an embodiment, as illustrated in FIG. 3A, the first additional object 231 may indicate simple information of the first additional information (e.g., weather information), and the fourth additional object 241 may indicate detailed information of the first additional information (e.g., weather information). The additional information may include "simple information" and "detailed information". The "simple information" may be information summarizing the additional information. The "detailed information" may be information describing the additional information in detail. The amount of information of the simple information may be less than the amount of information of the detailed information. According to an embodiment, the amount of information indicated by the first additional object 231 and the amount of information indicated by the fourth additional object 241 may be the same. According to an embodiment, a display direction (e.g., the first direction 291) of the first additional object 231 and a display direction (e.g., the second direction 291) of the fourth additional object 241 may be different. According to an embodiment, the display direction of the first additional object 231 and the display direction of the fourth additional object 241 may be the same. For example, (b) of FIG. 3A is an embodiment illustrating display in the second direction 292, but the electronic device 101 may also display objects in the first direction 291 according to rotation of the electronic device 101 in the second state. In other words, each of the objects 240, 241, 242, 243 of (b) of FIG. 3A may be displayed in a direction rotated 90 degrees clockwise (or counterclockwise) according to rotation of the electronic device 101 in the second state.

The operation 502 and the operation 503 are further described for each piece of information with reference to FIG. 3A as follows.

For example, referring to FIG. 3A, the electronic device 101 (e.g., the processor 120) may display the first screen (e.g., the screen of (a) of FIG. 3A) including the second additional object 232 indicating the second additional information (e.g., date information) in the first state. The second additional object 232 may be displayed on the first area 211 in the first direction 291. The electronic device 101 may replace the second additional object 232 indicating the second additional information (e.g., date information) with a fifth additional object 242 indicating the second additional information (e.g., date information) based on the state of the electronic device 101 (or the flexible display 210) being switched from the first state to the second state, and display the second screen (e.g., the screen of (b) of FIG. 3A) including the fifth additional object 242. The electronic device 101 may replace the fifth additional object 242 indicating the second additional information (e.g., date information) with the second additional object 232 indicating the second additional information (e.g., date information) based on the state of the electronic device 101 (or the flexible display 210) being switched from the second state to the first state, and display the second screen (e.g., the screen of (b) of FIG. 3A) including the second additional object 232. The fifth additional object 242 may be displayed on the second area (e.g., the second sub area 213) in the second direction 292. The second additional object 232 and the fifth additional object 242 may indicate the same second additional information (e.g., date information). However, according to an embodiment, as illustrated in FIG. 3A, the second additional object 232 may indicate simple information of the second additional information (e.g., date information), and the fifth additional object 242 may indicate detailed information of the second additional information (e.g., date information). According to an embodiment, the amount of information indicated by the second additional object 232 and the amount of information indicated by the fifth additional object 242 may be the same. According to an embodiment, a display direction (e.g., the first direction 291) of the second additional object 232 and a display direction (e.g., the second direction 291) of the fifth additional object 242 may be different. According to an embodiment, the display direction of the second additional object 232 and the display direction of the fifth additional object 242 may be the same. For example, (b) of FIG. 3A is an embodiment illustrating display in the second direction 292, but the electronic device 101 may also display objects in the first direction 291 according to rotation of the electronic device 101 in the second state. In other words, each of the objects 240, 241, 242, 243 of (b) of FIG. 3A may be displayed in a direction rotated 90 degrees clockwise (or counterclockwise) according to rotation of the electronic device 101 in the second state.

The third additional object 233 and the sixth additional object 243 indicating the third additional information (e.g., step count information) may be similarly understood, and overlapping descriptions are omitted.

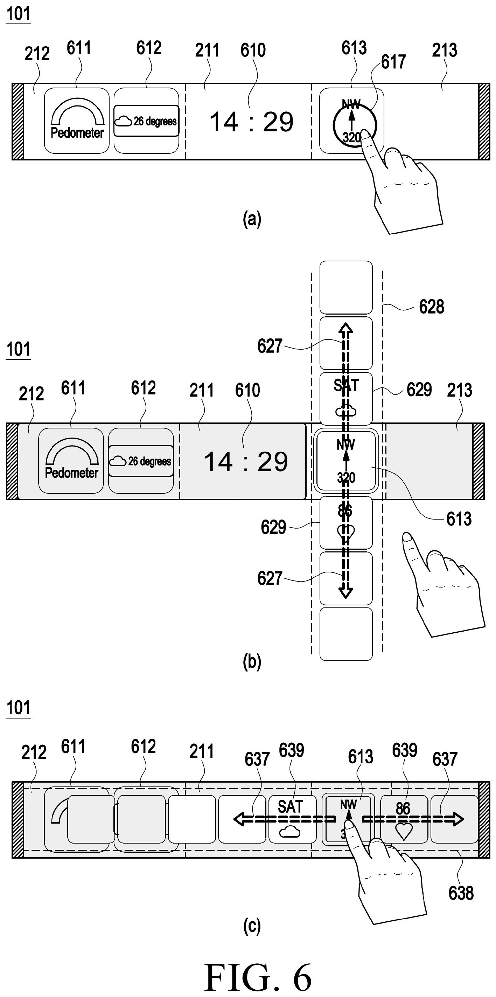

FIG. 6 is a view illustrating replacement of an additional object according to an embodiment.

Referring to FIG. 6, replacement of an additional object indicating additional information in the second state (e.g., an unbent state, an unfolded state, or a non-worn state) of the electronic device 101 (or the flexible display 210) may be described.

For example, (a) of FIG. 6 is a state in which a second screen including a time object (e.g., 610) and additional object(s) (e.g., 611, 612, 613) is displayed. In (a) of FIG. 6, the screen of (b) of FIG. 6 or the screen of (c) of FIG. 6 may be displayed according to a user input (e.g., 617). While the screen of (a) of FIG. 6 is displayed, the screen of (b) of FIG. 6 or the screen of (c) of FIG. 6 may be displayed according to a setting of the electronic device 101 based on the user input (e.g., 617). (b) of FIG. 6 is a screen in which a list (e.g., 628) for replacing an additional object is displayed in a portrait direction. (c) of FIG. 6 is a screen in which a list (e.g., 638) for replacing an additional object is displayed in a landscape direction (e.g., a length direction).

This is described in detail with reference to FIG. 6.

According to an embodiment, referring to FIG. 6, the electronic device 101 (e.g., the processor 120) may display a screen (e.g., the screen of (a) of FIG. 6) including a time object 610 indicating time information, a first additional object 611 indicating first additional information (e.g., step count information), a second additional object 612 indicating second additional information (e.g., weather information), and a third additional object 613 indicating third additional information (e.g., direction information) in the second state. The electronic device 101 may identify a user input (e.g., 617) while displaying the screen (e.g., the screen of (a) of FIG. 6). The electronic device 101 may identify a user input 617 (e.g., a touch input, a long press input) for the third additional object 613 in the screen (e.g., the screen of (a) of FIG. 6). The type of the user input 617 is not limited. The electronic device 101 may display a list (e.g., 628 or 638) for replacing an additional object based on the user input 617 for the third additional object 613. The electronic device 101 may display a list (e.g., 628 of (b) of FIG. 6) in a portrait direction for replacing an additional object based on the user input 617 for the third additional object 613 according to a first setting. The electronic device 101 may display a list (e.g., 638 of (c) of FIG. 6) in a landscape direction (e.g., a length direction) for replacing an additional object based on the user input 617 for the third additional object 613 according to a second setting. The first setting or the second setting may be preset. The list (e.g., 628 or 638) for replacing an additional object may include a replaceable additional object (e.g., 629 or 639). The list (e.g., 628 or 638) for replacing an additional object may include the existing additional object (e.g., 613).

According to an embodiment, the list 628 in a portrait direction for replacing an additional object is illustrated in (b) of FIG. 6 as being displayed entirely in a portrait direction, but this is for convenience of description, and only a portion of the list 628 of (b) of FIG. 6 may be displayed on the screen. Another portion of the list 628 of (b) of FIG. 6 may not be displayed on the screen.

According to an embodiment, in (b) of FIG. 6, a display attribute of an area (e.g., the entire area of 211 and 212 and another partial area of 213) other than an area (e.g., a partial area of 213) where the list 628 is displayed among the areas of the flexible display 210 may be changed. For example, the display attribute may include screen brightness, transparency, or screen color. For example, in (b) of FIG. 6, the area other than the area where the list 628 is displayed among the areas of the flexible display 210 may be displayed more dimly than when the list 628 is not displayed. In the list 628 of (b) of FIG. 6, the electronic device 101 may identify a user input (e.g., 627) (e.g., a drag input, a swipe input) such that a portion that was not displayed because it does not correspond to the flexible display 210 is displayed on the screen. The electronic device 101 may determine a portion displayed on the screen (e.g., the screen of (b) of FIG. 6) in the list 628 based on a user input (e.g., 627) (e.g., a drag input, a swipe input) on the list 628. According to an embodiment, the electronic device 101 may select an additional object (e.g., one of 613, 629 of (b) of FIG. 6) displayed on the screen (e.g., the screen of (b) of FIG. 6) at an end time based on the end of the user input 627 (e.g., a drag input, a swipe input) on the list 628. According to an embodiment, the electronic device 101 may select an additional object (e.g., one of 613, 629 of (b) of FIG. 6) displayed on the screen (e.g., the screen of (b) of FIG. 6) based on elapse of a designated period from an end time of the user input 627 (e.g., a drag input, a swipe input) on the list 628. The electronic device 101 may display the selected additional object (e.g., one of 613, 629 of (b) of FIG. 6) on the screen. In this case, if the previously displayed additional object (e.g., 613) is not selected, display of the previously displayed additional object (e.g., 613) may be stopped, and a new additional object (e.g., one of 629) may be displayed. This may be referred to as replacement of an additional object.

According to an embodiment, a portion that does not correspond to the flexible display 210 in the list 638 of (c) of FIG. 6 may not be displayed on the screen. For example, if the number of additional objects included in the list 638 is large, at least some of the additional objects included in the list 638 may not be displayed on the screen (e.g., the screen of (c) of FIG. 6). According to an embodiment, in (c) of FIG. 6, a display attribute of an area other than an area where the list 638 is displayed among the areas of the flexible display 210 may be changed. For example, the display attribute may include screen brightness, transparency, or screen color. For example, in (c) of FIG. 6, the area other than the area where the list 638 is displayed among the areas of the flexible display 210 may be displayed more dimly than when the list 638 is not displayed. In the list 638 of (c) of FIG. 6, the electronic device 101 may identify a user input (e.g., 637) (e.g., a drag input, a swipe input) such that a specific additional object (e.g., one of 613, 639) is displayed at a position where the existing additional object (e.g., 613) was displayed. In the list 638 of (c) of FIG. 6, the electronic device 101 may identify a user input (e.g., 637) (e.g., a drag input, a swipe input) such that a portion that was not displayed because it does not correspond to the flexible display 210 is displayed on the screen. The electronic device 101 may determine a specific additional object (e.g., one of 613, 639) to be displayed at a position where the existing additional object (e.g., 613) was displayed in the list 638 based on a user input (e.g., 637) (e.g., a drag input, a swipe input) on the list 638. The electronic device 101 may select a specific additional object (e.g., one of 613, 639) displayed at a position where the existing additional object (e.g., 613) was displayed at an end time based on the end of the user input 637 (e.g., a drag input, a swipe input) on the list 638. The electronic device 101 may display the selected additional object (e.g., one of 613, 639 of (c) of FIG. 6) on the screen.

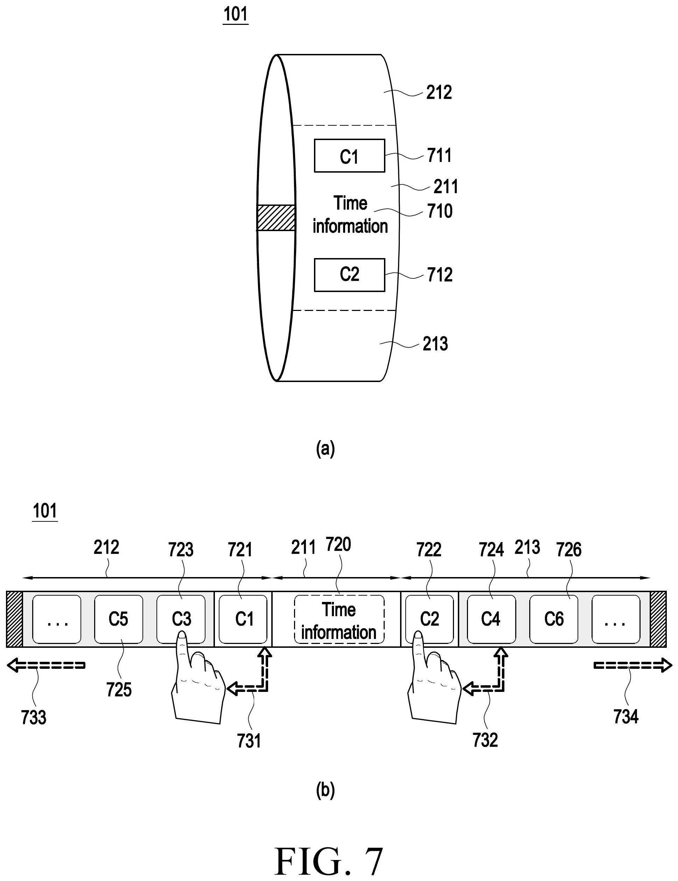

FIG. 7 is a view illustrating editing of an additional object according to an embodiment.

Referring to FIG. 7, editing (e.g., position change or position movement) of an additional object indicating additional information in the second state (e.g., an unbent state, an unfolded state, or a non-worn state) of the electronic device 101 (or the flexible display 210) may be described.

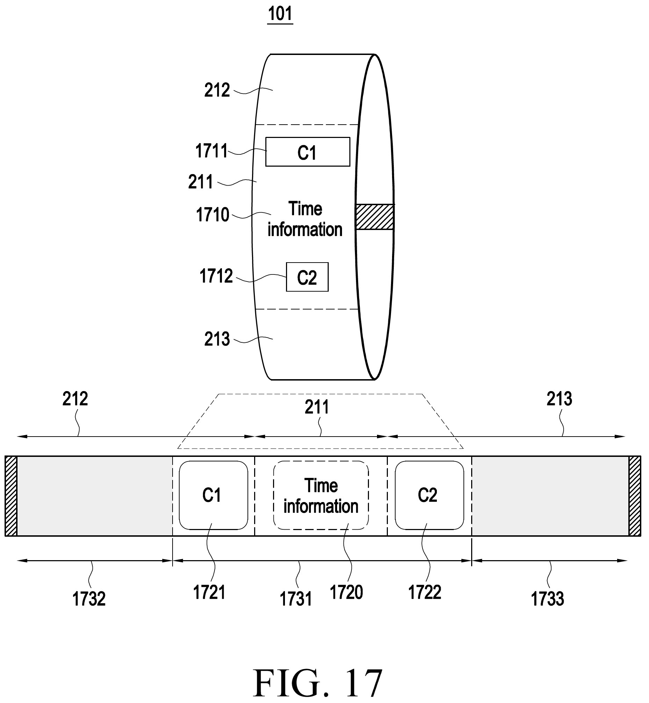

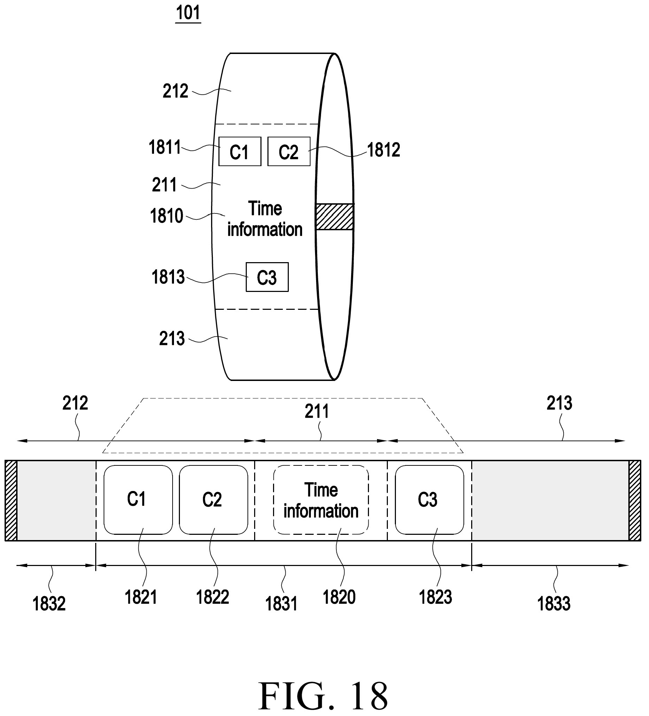

According to an embodiment, referring to (a) of FIG. 7, the electronic device 101 (e.g., the processor 120) may display a first screen including a first time object 710 indicating time information, a first additional object 711 indicating first additional information, and a second additional object 712 indicating second additional information in the first state. The first time object 710, the first additional object 711, and the second additional object 712 may be displayed on the first area 211 of the flexible display 210. The electronic device 101 may display the screen of (b) of FIG. 7 based on identifying that the state of the electronic device 101 (or the flexible display 210) is switched from the first state to the second state. The screen of (b) of FIG. 7 may include a second time object 720 indicating time information, a third additional object 721 indicating the first additional information, and a fourth additional object 722 indicating the second additional information. The second time object 720 may be displayed on the first area 211. The third additional object 721 may be displayed on the first sub area 212. The fourth additional object 722 may be displayed on the second sub area 213. Referring to (b) of FIG. 7, a "designated additional information area" and an "other additional information area" may be described. For example, in (b) of FIG. 7, the area where the third additional object 721 and the fourth additional object 722 are displayed may be referred to as a "designated additional information area". The "designated additional information area" may be an area where additional information displayed on the first area 211 in the first state is displayed in the second state. For example, the first additional object 711 indicating the first additional information and the second additional object 712 indicating the second additional information may be displayed on the screen in (a) of FIG. 7, and accordingly, the designated additional information area in (b) of FIG. 7 may be an area where the third additional object 721 indicating the first additional information and the fourth additional object 722 indicating the second additional information are displayed. The "other additional information area" may be an area other than the designated additional information area in the first sub area 212 and the second sub area 213. For example, the screen of (b) of FIG. 7 may include a fifth additional object 723 indicating third additional information, a sixth additional object 724 indicating fourth additional information, a seventh additional object 725 indicating fifth additional information, and an eighth additional object 726 indicating sixth additional information. The fifth additional object 723, the sixth additional object 724, the seventh additional object 725, and the eighth additional object 726 are for describing a position change of an additional object, and in (b) of FIG. 7, at least one of the fifth additional object 723, the sixth additional object 724, the seventh additional object 725, or the eighth additional object 726 may not be displayed on the screen. In (b) of FIG. 7, the fifth additional object 723, the sixth additional object 724, the seventh additional object 725, and the eighth additional object 726 may be displayed in the other additional information area. For example, the additional information displayed in the other additional information area in the second state may not be displayed on the first area 211 based on the state of the electronic device 101 being changed from the second state to the first state. For example, the additional information displayed in the designated additional information area in the second state may be displayed on the first area 211 based on the state of the electronic device 101 being changed from the second state to the first state. For example, the designated additional information area (e.g., the size and position of the designated additional information area) may be determined based on the number of additional information (e.g., additional objects corresponding to additional information) displayed on the first area 211 in the first state. The position and order in which the additional objects are displayed in the designated additional information area may be described in more detail with reference to FIG. 17 to FIG. 24.

The position change of an additional object is further described with reference to FIG. 7 as follows. According to an embodiment, the electronic device 101 may change a position where an additional object is displayed based on a user input (e.g., 731 or 732) (e.g., a drag and drop input) for the additional object (e.g., 723 or 722). For example, in (b) of FIG. 7, the electronic device 101 may display the third additional object 721 in the designated additional information area and display the fifth additional object 723 in the other additional information area. Then, the electronic device 101 may display the fifth additional object 723 in an area (e.g., the designated additional information area) where the third additional object 721 was displayed and display the third additional object 721 in an area (e.g., the other additional information area) where the fifth additional object 723 was displayed based on the user input 731 (e.g., a drag and drop input) for the fifth additional object 723. Accordingly, the fifth additional object 723 indicating the third additional information may be displayed in the designated additional information area. Then, an additional object (e.g., an additional object indicating the third additional information) corresponding to the fifth additional object 723 may be displayed on the first area 211 based on the state of the electronic device 101 being changed from the second state to the first state. For example, in (b) of FIG. 7, the electronic device 101 may display the fourth additional object 722 in the designated additional information area and display the sixth additional object 724 in the other additional information area. Then, the electronic device 101 may display the fourth additional object 722 in an area where the sixth additional object 724 was displayed and display the sixth additional object 724 in an area where the fourth additional object 722 was displayed based on the user input 732 (e.g., a drag and drop input) for the fourth additional object 722. This may be referred to as a change of a display position. Accordingly, the sixth additional object 724 indicating the fourth additional information may be displayed in the designated additional information area. Then, an additional object (e.g., an additional object indicating the fourth additional information) corresponding to the sixth additional object 724 may be displayed on the first area 211 based on the state of the electronic device 101 being changed from the second state to the first state. According to an embodiment, the electronic device 101 may perform a display position change operation based on identifying completion of editing. For example, in the above-described embodiment, identifying completion of the user input 732 (e.g., a drag and drop input) may be identifying completion of editing. For example, the electronic device 101 may identify completion of editing based on identifying a user input corresponding to completion of editing or identifying elapse of a designated time without an additional user input after completion of the user input 732 (e.g., a drag and drop input). Identification of completion of editing may also be applied to the embodiment of movement of a display position of an additional object described below. For example, the electronic device 101 may perform a display position movement operation based on identifying completion of editing. The method of identifying completion of editing is not limited.

According to an embodiment, the electronic device 101 may move a position where an additional object is displayed based on a user input (e.g., 732) (e.g., a drag and drop input) for the additional object (e.g., 722). For example, in (b) of FIG. 7, the electronic device 101 may identify a user input (e.g., 732) (e.g., a drag and drop input) for the fourth additional object 722 displayed in the designated additional information area. In this case, the user input (e.g., 732) may be completed in an area where no additional object is displayed (e.g., an area where no additional object is displayed in the other additional information area). Accordingly, the electronic device 101 may display the fourth additional object 722 at a point where the user input (e.g., 732) (e.g., a drag and drop input) is completed based on the user input (e.g., 732) (e.g., a drag and drop input) for the fourth additional object 722. This may be referred to as movement of a display position. Since there is no additional object displayed at that point previously, only the position where the fourth additional object 722 is displayed may be moved, and display of the remaining objects may be maintained. In this case, since the fourth additional object 722 is displayed in the other additional information area, thereafter, the additional object (e.g., an additional object indicating the second additional information) corresponding to the fourth additional object 722 may not be displayed on the first area 211 even when the state of the electronic device 101 is changed from the second state to the first state. According to an embodiment, the electronic device 101 may move a display position of an additional object or change display positions of additional objects within the other additional information area or within the designated additional information area, and overlapping descriptions are omitted.

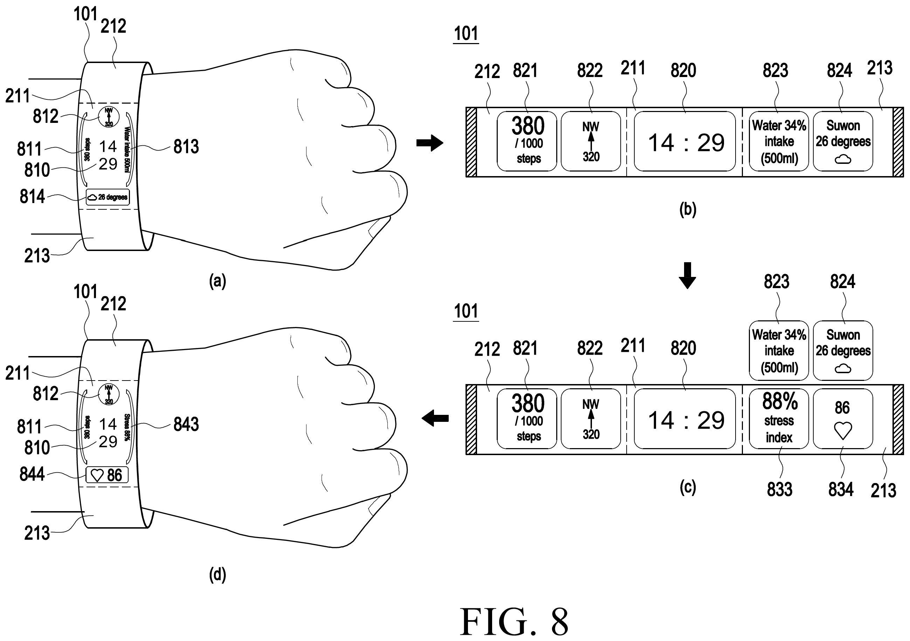

FIG. 8 is a view illustrating replacement of an additional object and transition of a state according to an embodiment.

Referring to FIG. 8, it may be described that an additional object displayed on the first area 211 after the state of the electronic device 101 (e.g., the flexible display 210) is switched from the second state to the first state is changed as an additional object indicating additional information is replaced in the second state.

For example, (a) of FIG. 8 illustrates a first screen displayed on the first area 211 in the first state. (b) of FIG. 8 illustrates a second screen displayed in the second state based on the state of the electronic device 101 (e.g., the flexible display 210) being switched from the first state to the second state after the first screen is displayed. (c) of FIG. 8 illustrates a third screen in which an additional object is replaced in the second state. (d) of FIG. 8 illustrates a fourth screen in which an additional object displayed on the first area 211 is changed based on the state of the electronic device 101 (e.g., the flexible display 210) being switched from the second state to the first state after the additional object is replaced in the second state.

This is described in detail with reference to FIG. 8.

According to an embodiment, referring to FIG. 8, the electronic device 101 (e.g., the processor 120) may sequentially display the screens of (a), (b), (c), and (d) of FIG. 8. For example, in (a) of FIG. 8, the electronic device 101 may display a first screen including a first time object 810 indicating time information, a first additional object 811 indicating first additional information (e.g., step count), a second additional object 812 indicating second additional information (e.g., direction), a third additional object 813 indicating third additional information (e.g., water intake), and a fourth additional object 814 indicating fourth additional information (e.g., weather) on the first area 211 in the first state. In (b) of FIG. 8, the electronic device 101 may display a second screen including a second time object 820 indicating time information, a fifth additional object 821 indicating the first additional information (e.g., step count), a sixth additional object 822 indicating the second additional information (e.g., direction), a seventh additional object 823 indicating the third additional information (e.g., water intake), and an eighth additional object 824 indicating the fourth additional information (e.g., weather) in the second state based on the state of the electronic device 101 (e.g., the flexible display 210) being switched from the first state to the second state. The second time object 820 may correspond to the first time object 810 and may be displayed on the first area 211. The fifth additional object 821 may correspond to the first additional object 811 and may be displayed on the first sub area 212. The sixth additional object 822 may correspond to the second additional object 812 and may be displayed on the first sub area 212. The seventh additional object 823 may correspond to the third additional object 813 and may be displayed on the second sub area 213. The eighth additional object 824 may correspond to the fourth additional object 814 and may be displayed on the second sub area 213. In (c) of FIG. 8, the electronic device 101 may replace an additional object (e.g., 823, 824) with another additional object (e.g., 833, 834) based on a user input. For example, a ninth additional object 833 newly displayed in (c) of FIG. 8 may indicate fifth additional information (e.g., stress index). A tenth additional object 834 newly displayed in (c) of FIG. 8 may indicate sixth additional information (e.g., heart rate). Replacement of an additional object may be understood with reference to the descriptions of other embodiments, and overlapping descriptions are omitted. In (d) of FIG. 8, the electronic device 101 may display a fourth screen including the first time object 810 indicating time information, the first additional object 811 indicating the first additional information (e.g., step count), the second additional object 812 indicating the second additional information (e.g., direction), an eleventh additional object 843 indicating the fifth additional information (e.g., stress index), and a twelfth additional object 844 indicating the sixth additional information (e.g., heart rate) on the first area 211 in the first state based on the state of the electronic device 101 (e.g., the flexible display 210) being switched from the second state to the first state after the additional object is replaced. The eleventh additional object 843 may correspond to the ninth additional object 833. The twelfth additional object 844 may correspond to the tenth additional object 834.

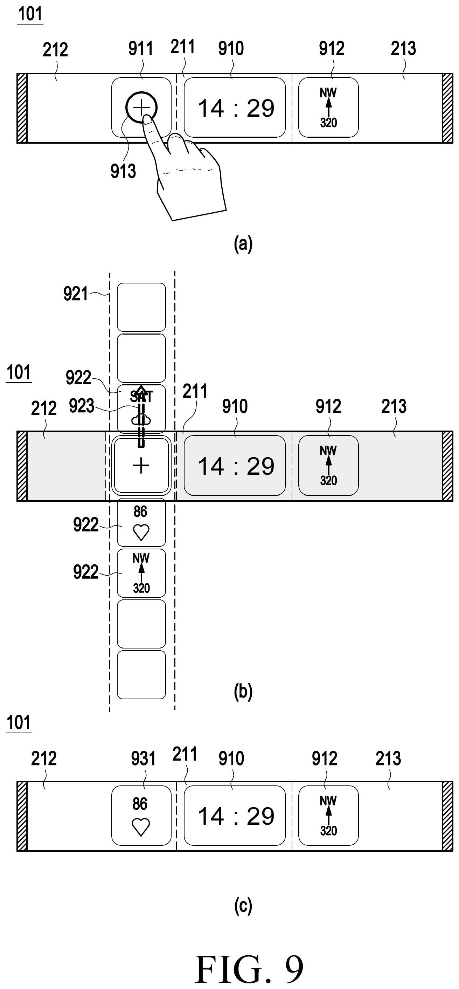

FIG. 9 is a view illustrating addition of an additional object according to an embodiment.

According to an embodiment, referring to FIG. 9, addition of an additional object indicating additional information in the second state (e.g., an unbent state, an unfolded state, or a non-worn state) of the electronic device 101 (or the flexible display 210) may be described.

According to an embodiment, referring to FIG. 9, the electronic device 101 (e.g., the processor 120) may sequentially display the screens of (a), (b), and (c) of FIG. 9. For example, in (a) of FIG. 9, the electronic device 101 (e.g., the processor 120) may display a screen including a time object 910 indicating time information and a first additional object 912 indicating first additional information (e.g., direction). The time object 910 may be displayed on the first area 211. The first additional object 912 may be displayed on the second sub area 213. In (a) of FIG. 9, the electronic device 101 may display an object 911 for adding an additional object. The electronic device 101 may display the screen of (b) of FIG. 9 based on a user input 913 (e.g., a touch input) for the object 911 for adding an additional object. In (b) of FIG. 9, the electronic device 101 may display a list 921 for adding an additional object. At least a portion of the list 921 may be displayed at a position where the object 911 for adding an additional object was displayed. For example, the list 921 may be displayed in a portrait direction as illustrated in (b) of FIG. 9. (b) of FIG. 9 is illustrated as displaying the entire list 921, but this is for convenience of description, and a portion corresponding to the flexible display 210 in the list 921 of (b) of FIG. 9 may be displayed on the screen. For example, the list 921 may also be displayed in a landscape direction (e.g., a length direction). In (b) of FIG. 9, the list 921 may include an additional object (e.g., 922) that may be added. The electronic device 101 may select an additional object (e.g., one of the additional objects including 922) to be displayed at a position where the existing object 911 for adding an additional object was displayed based on a user input 923 (e.g., a drag input, a swipe input) on the list 921. For example, the electronic device 101 may select an additional object (e.g., one of the additional objects including 922) to be displayed at a position where the existing object 911 for adding an additional object was displayed based on the end of the user input 923 (e.g., a drag input, a swipe input) or elapse of a designated period from an end time of the user input 923 (e.g., a drag input, a swipe input). In (c) of FIG. 9, the electronic device 101 may display the selected additional object 931 at a position where the existing object 911 for adding an additional object was displayed. Display of a list and selection of an additional object may be understood with reference to other embodiments, and overlapping descriptions are omitted.

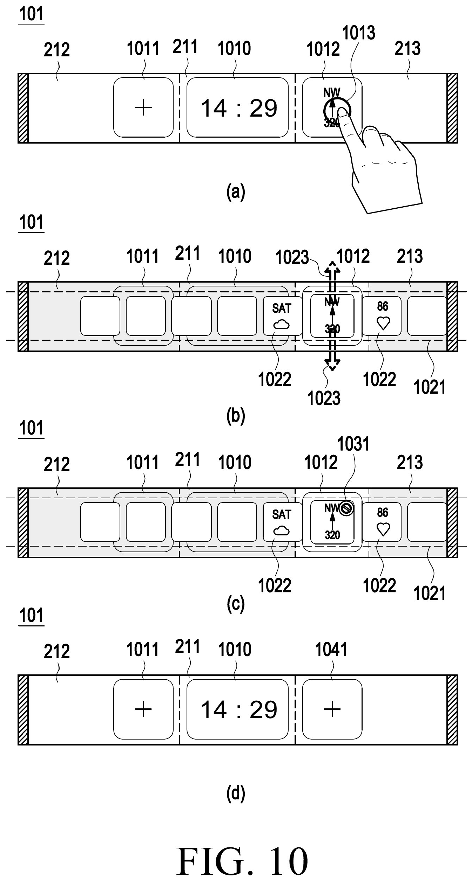

FIG. 10 is a view illustrating deletion of an additional object according to an embodiment.

According to an embodiment, referring to FIG. 10, deletion of an additional object indicating additional information in the second state (e.g., an unbent state, an unfolded state, or a non-worn state) of the electronic device 101 (or the flexible display 210) may be described.

According to an embodiment, referring to FIG. 10, the electronic device 101 (e.g., the processor 120) may sequentially display the screens of (a), (b), and (d) of FIG. 10, or sequentially display the screens of (a), (c), and (d) of FIG. 10. (b) of FIG. 10 illustrates an embodiment of deleting an additional object (e.g., 1012) based on a user input (e.g., 1023) (e.g., a swipe input). (c) of FIG. 10 illustrates an embodiment of deleting an additional object (e.g., 1012) based on a user input (e.g., a touch input) for a delete button (e.g., 1031).

An embodiment of sequentially displaying the screens of (a), (b), and (d) of FIG. 10 is described as follows. For example, in (a) of FIG. 10, the electronic device 101 (e.g., the processor 120) may display a first screen including a time object 1010 indicating time information and an additional object 1012 indicating additional information (e.g., direction). The first screen may include an object 1011 for adding an additional object. The electronic device 101 may display the screen of (b) of FIG. 10 based on a user input 1013 (e.g., a touch input) for the additional object 1012. In (b) of FIG. 10, the electronic device 101 may display a list 1021 for replacing an additional object. The list 1021 may include another replaceable object (e.g., 1022). The electronic device 101 may delete the additional object 1012 based on a user input 1023 (e.g., a swipe input upward or downward on the additional object 1012) while the list 1021 is displayed. Deletion of an additional object (e.g., 1012) may be stopping display of the additional object (e.g., 1012). In (d) of FIG. 10, the electronic device 101 may display a screen in which the additional object 1012 is deleted. The electronic device 101 may display an object 1041 for adding an additional object at a position where the additional object 1012 is deleted.

An embodiment of sequentially displaying the screens of (a), (c), and (d) of FIG. 10 is described as follows. For example, in (a) of FIG. 10, the electronic device 101 (e.g., the processor 120) may display a first screen including a time object 1010 indicating time information and an additional object 1012 indicating additional information (e.g., direction). The first screen may include an object 1011 for adding an additional object. The electronic device 101 may display the screen of (c) of FIG. 10 based on a user input 1013 (e.g., a touch input) for the additional object 1012. In (c) of FIG. 10, the electronic device 101 may display a list 1021 for replacing an additional object. The list 1021 may include another replaceable object (e.g., 1022). The list 1021 may include a delete button 1031. The electronic device 101 may delete the additional object 1012 based on a user input (e.g., an input selecting the delete button 1031) while the list 1021 is displayed. In (d) of FIG. 10, the electronic device 101 may display a screen in which the additional object 1012 is deleted. The electronic device 101 may display an object 1041 for adding an additional object at a position where the additional object 1012 is deleted.

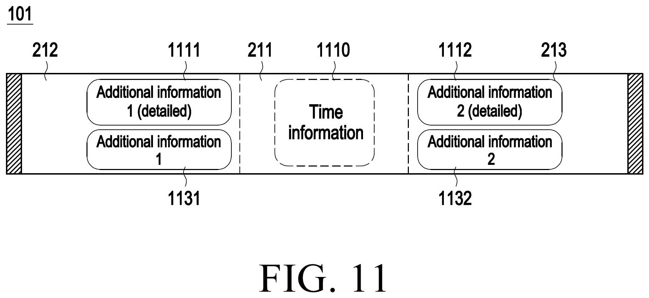

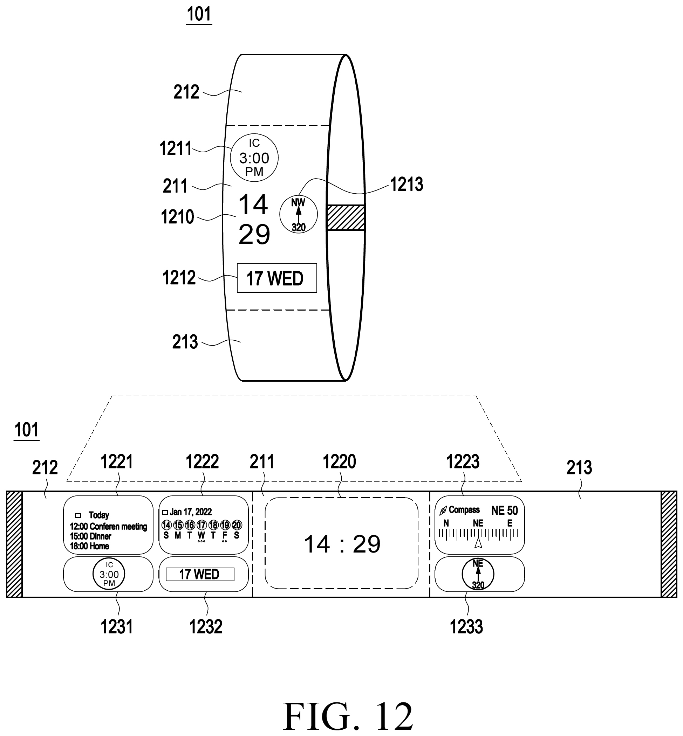

FIG. 11 is a view illustrating simple information and detailed information according to an embodiment. FIG. 12 is a view illustrating simple information and detailed information according to an embodiment.

Referring to FIG. 11, an embodiment of displaying simple information displayed in the first state (e.g., a worn state or a bent state) together when displaying detailed information of additional information in the second state (e.g., an unbent state, an unfolded state, or a non-worn state) of the electronic device 101 (or the flexible display 210) may be described. FIG. 12 may be an example of FIG. 11.

Referring to FIG. 11, the electronic device 101 (e.g., the processor 120) may display the screen of FIG. 11 based on the state of the electronic device 101 (or the flexible display 210) being switched from the first state to the second state while displaying the first screen in the first state. The first screen of the first state may include a first time object indicating time information, a first additional object indicating first additional information, and a second additional object indicating second additional information. The screen (e.g., the second screen) of the second state of FIG. 11 may include a second time object 1110 indicating time information, a third additional object (e.g., 1111, 1131) indicating the first additional information, and a fourth additional object (e.g., 1112, 1132) indicating the second additional information. The third additional object (e.g., 1111, 1131) may include an object 1111 indicating detailed information of the first additional information and an object 1131 indicating simple information of the first additional information. The object 1131 indicating simple information of the first additional information in the second screen may correspond to the first additional object in the first screen. For example, the electronic device 101 may display the object (e.g., the object 1131 indicating simple information of the first additional information in the second screen) corresponding to the first additional object in the first screen on the second screen. According to the embodiment of FIG. 11, a user may recognize which object in the first screen corresponds to an object displayed in the second screen.

For example, referring to FIG. 12, the electronic device 101 (e.g., the processor 120) may display a first screen including a first time object 1210 indicating time information, a first additional object 1211 indicating first additional information (e.g., schedule), a second additional object 1212 indicating second additional information (e.g., date), and a third additional object 1213 indicating third additional information (e.g., direction) on the first area 211 in the first state. The electronic device 101 may display a second screen based on the state of the electronic device 101 (or the flexible display 210) being switched from the first state to the second state while displaying the first screen. The second screen may include a second time object 1220 indicating time information, a fourth additional object 1221 indicating detailed information of the first additional information (e.g., schedule), a fifth additional object 1222 indicating detailed information of the second additional information (e.g., date), a sixth additional object 1223 indicating detailed information of the third additional information (e.g., direction), a seventh additional object 1231 indicating simple information of the first additional information (e.g., schedule), an eighth additional object 1232 indicating simple information of the second additional information (e.g., date), and a ninth additional object 1233 indicating simple information of the third additional information (e.g., direction). The seventh additional object 1231 indicating simple information of the first additional information (e.g., schedule) in the second screen may correspond to the first additional object 1211 indicating the first additional information (e.g., schedule) in the first screen. The eighth additional object 1232 indicating simple information of the second additional information (e.g., date) in the second screen may correspond to the second additional object 1212 indicating the second additional information (e.g., date) in the first screen. The ninth additional object 1233 indicating simple information of the third additional information (e.g., direction) in the second screen may correspond to the third additional object 1213 indicating the third additional information (e.g., direction) in the first screen.

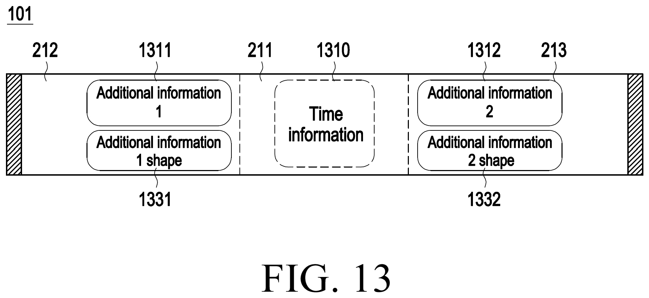

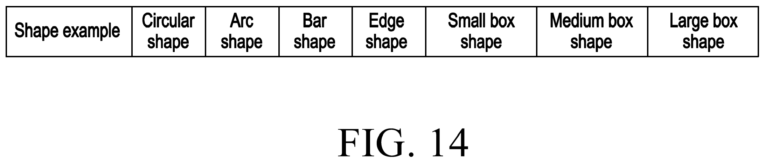

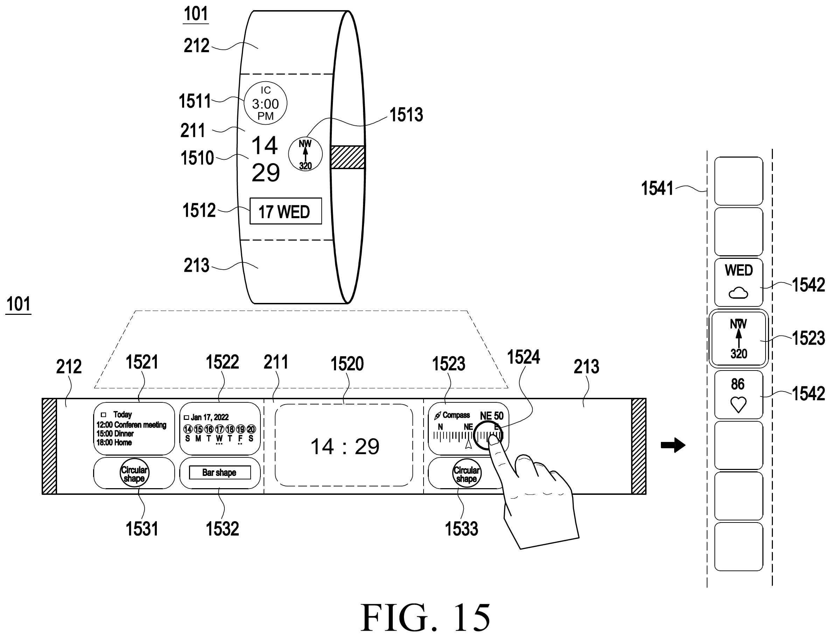

FIG. 13 is a view illustrating a shape in which additional information is displayed according to an embodiment. FIG. 14 is a view illustrating a shape in which additional information is displayed according to an embodiment. FIG. 15 is a view illustrating a shape in which additional information is displayed according to an embodiment.

Referring to FIG. 13, an embodiment of displaying a shape in which the corresponding additional information is displayed when displaying detailed information of additional information in the second state (e.g., an unbent state, an unfolded state, or a non-worn state) of the electronic device 101 (or the flexible display 210) may be described. Specific additional information may be displayed in a specific shape corresponding to the specific additional information. Specific additional information may support only some or all of shapes in which additional information is displayed. FIG. 14 may be an example of a shape corresponding to additional information. For example, the shape in which additional information is displayed may include a circular shape, an arc shape, a bar shape, an edge shape, or a box shape (e.g., a small box shape, a medium box shape, a large box shape). The shape supported by additional information is not limited to the embodiment of FIG. 14. FIG. 15 may be an example of FIG. 13.

According to an embodiment, referring to FIG. 13, the electronic device 101 (e.g., the processor 120) may display the screen of FIG. 13 based on the state of the electronic device 101 (or the flexible display 210) being switched from the first state to the second state while displaying the first screen in the first state. The first screen of the first state may include a first time object indicating time information, a first additional object indicating first additional information, and a second additional object indicating second additional information. The screen (e.g., the second screen) of the second state of FIG. 13 may include a second time object indicating time information, a third additional object (e.g., 1311, 1331) indicating the first additional information, and a fourth additional object (e.g., 1312, 1332) indicating the second additional information. The third additional object (e.g., 1311, 1331) may include an object 1311 indicating detailed information of the first additional information and an object 1331 indicating a shape corresponding to the first additional information. The object 1331 indicating the shape corresponding to the first additional information may indicate what the shape corresponding to the first additional information is. For example, the object 1331 indicating the shape corresponding to the first additional information may include a word corresponding to "circular", "arc", "bar", "edge", "small box", "medium box", or "large box". For example, the object 1331 indicating the shape corresponding to the first additional information may be implemented in a shape corresponding to "circular", "arc", "bar", "edge", "small box", "medium box", or "large box".

For example, referring to FIG. 15, the electronic device 101 (e.g., the processor 120) may display a first screen including a first time object 1510 indicating time information, a first additional object 1511 indicating first additional information (e.g., schedule), a second additional object 1512 indicating second additional information (e.g., date), and a third additional object 1513 indicating third additional information (e.g., direction) on the first area 211 in the first state. The electronic device 101 may display a second screen based on the state of the electronic device 101 (or the flexible display 210) being switched from the first state to the second state while displaying the first screen. The second screen may include a second time object 1520 indicating time information, a fourth additional object 1521 indicating detailed information of the first additional information (e.g., schedule), a fifth additional object 1522 indicating detailed information of the second additional information (e.g., date), a sixth additional object 1523 indicating detailed information of the third additional information (e.g., direction), a seventh additional object 1531 indicating a shape (e.g., circular) corresponding to the first additional information (e.g., schedule), an eighth additional object 1532 indicating a shape (e.g., bar) corresponding to the second additional information (e.g., date), and a ninth additional object 1533 indicating a shape (e.g., circular) corresponding to the third additional information (e.g., direction). The electronic device 101 may display a list 1541 including an additional object (e.g., 1542, 1523) indicating additional information supporting the shape (e.g., circular) corresponding to the third additional information (e.g., direction) based on a user input 1524 (e.g., a touch input) for the sixth additional object 1523 indicating detailed information of the third additional information (e.g., direction) or the ninth additional object 1533 indicating the shape (e.g., circular) corresponding to the third additional information (e.g., direction) in the second screen. Referring to FIG. 13 and FIG. 15, the electronic device 101 may display a list (e.g., 1541) for replacing with other additional information supporting the same shape as the shape corresponding to the additional information indicated by the previously displayed additional object. For example, in FIG. 15, simple information of direction information may be displayed in a circular shape, simple information of date information may be displayed in a circular shape, and simple information of heart rate information may be displayed in a circular shape, and accordingly, the list 1541 including the object 1542 corresponding to date information and the object 1542 corresponding to heart rate information may be displayed based on a user input for an object (e.g., 1523, 1533) corresponding to direction information.

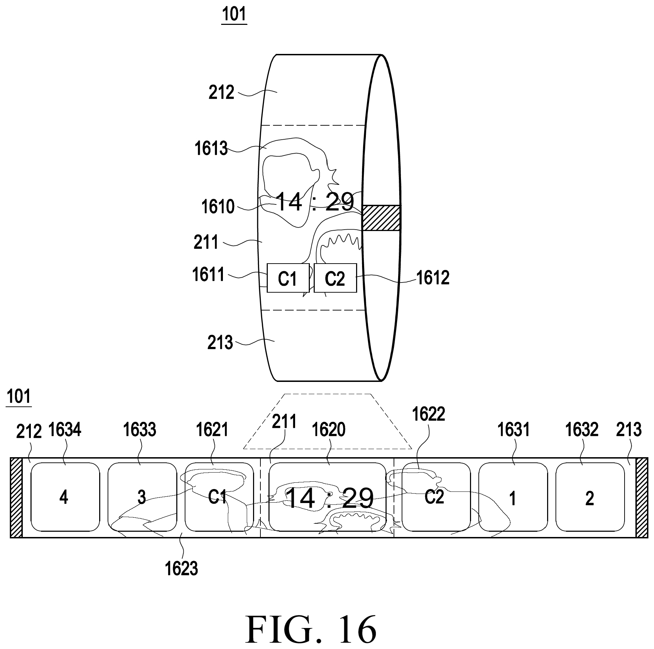

FIG. 16 is a view illustrating a background display method according to an embodiment.

Referring to FIG. 16, an operation of displaying a background according to a state of the electronic device 101 (or the flexible display 210) may be described.

According to an embodiment, referring to FIG. 16, the electronic device 101 (e.g., the processor 120) may display a first screen including a first time object 1610 indicating time information, a first additional object 1611 indicating first additional information, and a second additional object 1612 indicating second additional information on the first area 211 in the first state. The first screen may include a first background 1613. A background (e.g., 1613) may be an image stored in the memory 130 of the electronic device 101, but the type of background is not limited thereto. The electronic device 101 (e.g., the processor 120) may display a second screen including a second time object 1620 indicating time information, a third additional object 1621 indicating the first additional information, and a fourth additional object 1622 indicating the second additional information in the second state based on the state of the electronic device 101 (or the flexible display 210) being switched from the first state to the second state. The second screen may include other object(s) (e.g., 1631, 1632, 1633, 1634). The type of other object(s) (e.g., 1631, 1632, 1633, 1634) is not limited. The second screen may include a second background 1623. In FIG. 16, the second background 1623 may correspond to the first background 1613. For example, an image corresponding to the second background 1623 may be the same as an image corresponding to the first background 1613. The second background 1623 may be extended compared to the first background 1613. Expansion of a background may be displaying an area that was not displayed on the screen among a plurality of areas of a background image. Expansion of a background may be an increase in a ratio where a background image is displayed on the screen in a specific direction (e.g., left and right). For example, the first background 1613 may include only a partial area of a background image. The second background 1623 may include an area wider than the area included in the first background 1613 among the plurality of areas of the background image. For example, the second background 1623 may include the same area as a partial area of the background image displayed in the first background 1613, and the left and right ratio may be extended. For example, the first background 1613 includes only 2 people among the people included in the background image (e.g., a family photo), but the second background 1623 may include 4 people among the people included in the background image (e.g., a family photo).

FIG. 17 is a view illustrating a background color according to an embodiment. FIG. 18 is a view illustrating a background color according to an embodiment.

Referring to FIG. 17 and FIG. 18, an operation of displaying a background (e.g., a background color) according to a state of the electronic device 101 (or the flexible display 210) may be described. According to an embodiment, the electronic device 101 may extract a representative color of a first screen of the first state and use the extracted color as a background color of a second screen of the second state.

For example, referring to FIG. 17, the electronic device 101 (e.g., the processor 120) may display a first screen including a first time object 1710 indicating time information, a first additional object 1711 indicating first additional information, and a second additional object 1712 indicating second additional information on the first area 211 in the first state. The electronic device 101 (e.g., the processor 120) may display a second screen including a second time object 1720 indicating time information, a third additional object 1721 indicating the first additional information, and a fourth additional object 1722 indicating the second additional information in the second state based on the state of the electronic device 101 (or the flexible display 210) being switched from the first state to the second state. The second time object 1720 of the second screen may be displayed on the first area 211. The third additional object 1721 of the second screen may be displayed on the first sub area 212. The fourth additional object 1722 of the second screen may be displayed on the second sub area 213. According to an embodiment, in the second screen of the second state, a background color of an area 1731 where the second time object 1720, the third additional object 1721, and the fourth additional object 1722 are displayed may correspond to the representative color of the first screen of the first state. The representative color of the first screen may be a color selected from among the colors included in the screen (e.g., the first screen) displayed on the first area 211 in the first state. For example, the representative color of the first screen may be a color having the widest display area in the first screen. For example, the representative color of the first screen may be a color having the largest number of displayed colors in the first screen. For example, the representative color of the first screen may be a color selected from among the colors included in an object corresponding to additional information in the first screen (e.g., a color having the widest area or a color having the largest number). For example, the representative color of the first screen may be a color of a background of the first screen. In the second screen of the second state, a background color of an area (e.g., 1732, 1733) other than the area 1731 where the second time object 1720, the third additional object 1721, and the fourth additional object 1722 are displayed may be different from the background color of the area 1731 where the third additional object 1721 and the fourth additional object 1722 are displayed. A screen may not be displayed on the other area (e.g., 1732, 1733).

According to an embodiment, referring to FIG. 18, FIG. 18 may display one more additional information than the additional information displayed in FIG. 17. Accordingly, an area 1831 where the time object and the additional objects are displayed may be wider in the second state. For example, referring to FIG. 18, the electronic device 101 (e.g., the processor 120) may display a first screen including a first time object 1810 indicating time information, a first additional object 1811 indicating first additional information, a second additional object 1812 indicating second additional information, and a third additional object 1813 indicating third additional information on the first area 211 in the first state. The electronic device 101 (e.g., the processor 120) may display a second screen including a second time object 1820 indicating time information, a fourth additional object 1821 indicating the first additional information, a fifth additional object 1822 indicating the second additional information, and a sixth additional object 1823 indicating the third additional information in the second state based on the state of the electronic device 101 (or the flexible display 210) being switched from the first state to the second state. The second time object 1820 of the second screen may be displayed on the first area 211. The fourth additional object 1821 of the second screen may be displayed on the first sub area 212. The fifth additional object 1822 of the second screen may be displayed on the first sub area 212. The sixth additional object 1823 of the second screen may be displayed on the second sub area 213. According to an embodiment, in the second screen of the second state, a background color of an area 1831 where the second time object 1820, the fourth additional object 1821, the fifth additional object 1822, and the sixth additional object 1823 are displayed may correspond to the representative color of the first screen of the first state. In the second screen of the second state, a background color of an area (e.g., 1832, 1833) other than the area 1831 where the second time object 1820, the fourth additional object 1821, the fifth additional object 1822, and the sixth additional object 1823 are displayed may be different from the background color of the area 1831 where the second time object 1820, the fourth additional object 1821, the fifth additional object 1822, and the sixth additional object 1823 are displayed in the second screen of the second state. A screen may not be displayed on the other area (e.g., 1832, 1833).

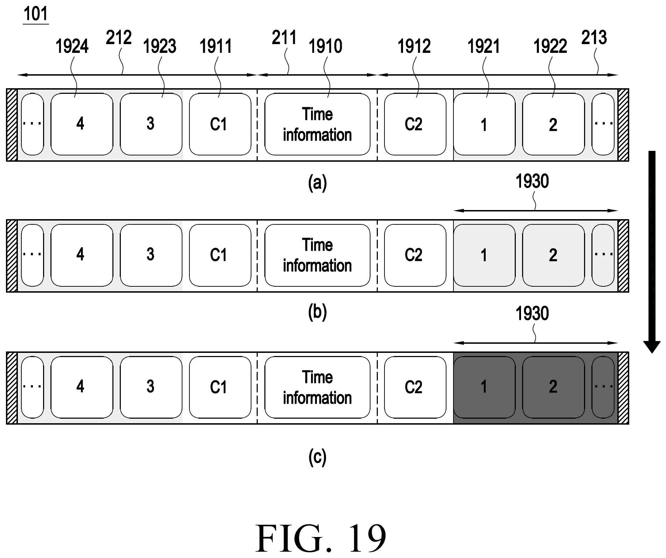

FIG. 19 is a view illustrating a display attribute of a screen according to an embodiment.

Referring to FIG. 19, an operation of adjusting a display attribute (e.g., screen brightness, transparency, or screen color) of a screen according to a bending angle of the electronic device 101 (or the flexible display 210) may be described. According to an embodiment, the electronic device 101 may adjust a display attribute (e.g., screen brightness, transparency, or screen color) of a screen as a bending angle of the electronic device 101 (or the flexible display 210) is changed. For example, as the bending angle of the electronic device 101 (or the flexible display 210) increases, the brightness of the screen may be adjusted to be darker.

For example, referring to FIG. 19, the electronic device 101 (e.g., the processor 120) may display a second screen including a time object 1910 indicating time information, a first additional object 1911 indicating first additional information, and a second additional object 1912 indicating second additional information in the second state (e.g., an unbent state, an unfolded state, or a non-worn state) of the electronic device 101 (or the flexible display 210). The time object 1910 may be displayed on the first area 211. The first additional object 1911 may be displayed on the first sub area 212. The second additional object 1912 may be displayed on the second sub area 213. The second screen may include other objects (e.g., 1921, 1922, 1923, 1924). Then, the electronic device 101 may identify the bending angle of the electronic device 101 (or the flexible display 210) using the bending sensor (e.g., 441). For example, referring to (a), (b), and (c) of FIG. 19, the electronic device 101 may identify that the bending angle of the second sub area 213 of the flexible display 210 gradually increases. For example, in (a) of FIG. 19, at a first time, the electronic device 101 may identify that the first bending angle of the first sub area 212 is a first angle (e.g., 0 degrees) and the second bending angle of the second sub area 213 is the first angle (e.g., 0 degrees). In (a) of FIG. 19, the electronic device 101 may set the brightness of the first sub area 212 to a first brightness corresponding to the first bending angle (e.g., the first angle (e.g., 0 degrees)) of the first sub area 212. In (a) of FIG. 19, the electronic device 101 may set the brightness of the second sub area 213 (e.g., the entire second sub area 213 or a partial area 1930) to a first brightness corresponding to the second bending angle (e.g., the first angle (e.g., 0 degrees)) of the second sub area 213. In (b) of FIG. 19, at a second time after the first time, the electronic device 101 may identify that the first bending angle of the first sub area 212 is the first angle (e.g., 0 degrees) and the second bending angle of the second sub area 213 is a second angle (e.g., 20 degrees). In (b) of FIG. 19, the electronic device 101 may set the brightness of the first sub area 212 to a first brightness corresponding to the first bending angle (e.g., the first angle (e.g., 0 degrees)) of the first sub area 212. In (b) of FIG. 19, the electronic device 101 may set the brightness of the second sub area 213 (e.g., the entire second sub area 213 or a partial area 1930) to a second brightness corresponding to the second bending angle (e.g., the second angle (e.g., 20 degrees)) of the second sub area 213. The second brightness corresponding to the second angle (e.g., 20 degrees) may be darker than the first brightness corresponding to the first angle (e.g., 0 degrees). In (c) of FIG. 19, at a third time after the second time, the electronic device 101 may identify that the first bending angle of the first sub area 212 is the first angle (e.g., 0 degrees) and the second bending angle of the second sub area 213 is a third angle (e.g., 40 degrees). In (c) of FIG. 19, the electronic device 101 may set the brightness of the first sub area 212 to a first brightness corresponding to the first bending angle (e.g., the first angle (e.g., 0 degrees)) of the first sub area 212. In (c) of FIG. 19, the electronic device 101 may set the brightness of the second sub area 213 (e.g., the entire second sub area 213 or a partial area 1930) to a third brightness corresponding to the second bending angle (e.g., the third angle (e.g., 40 degrees)) of the second sub area 213. The third brightness corresponding to the third angle (e.g., 40 degrees) may be darker than the second brightness corresponding to the second angle (e.g., 20 degrees). Referring to FIG. 19, an embodiment in which screen brightness among display attributes (e.g., screen brightness, transparency, or screen color) of a screen is changed has been described. Embodiments regarding transparency or screen color may also be similarly understood, and overlapping descriptions are omitted.

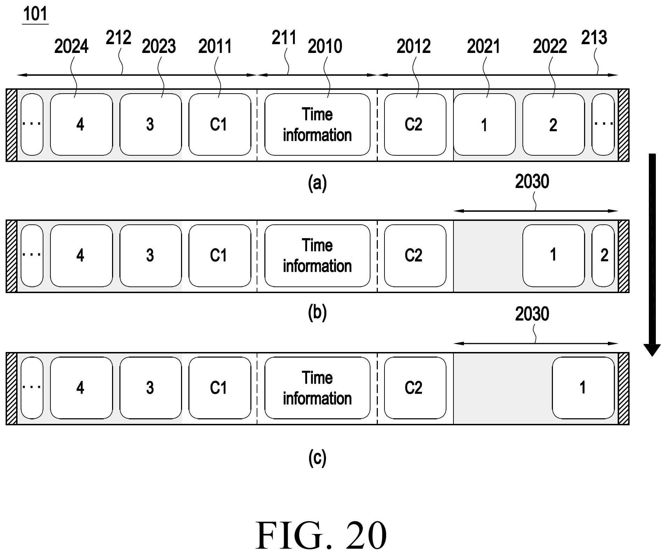

FIG. 20 is a view illustrating a screen display method according to an embodiment.

Referring to FIG. 20, an operation of adjusting a position of an object displayed on a screen according to a bending angle of the electronic device 101 (or the flexible display 210) may be described. According to an embodiment, the electronic device 101 may adjust a position of an object displayed on a screen as a bending angle of the electronic device 101 (or the flexible display 210) is changed. For example, as the bending angle of the electronic device 101 (or the flexible display 210) increases, an object displayed on the screen may disappear.

For example, referring to FIG. 20, the electronic device 101 (e.g., the processor 120) may display a second screen including a time object 2010 indicating time information, a first additional object 2011 indicating first additional information, and a second additional object 2012 indicating second additional information in the second state (e.g., an unbent state, an unfolded state, or a non-worn state) of the electronic device 101 (or the flexible display 210). The time object 2010 may be displayed on the first area 211. The first additional object 2011 may be displayed on the first sub area 212. The second additional object 2012 may be displayed on the second sub area 213. The second screen may include other objects (e.g., 2021, 2022, 2023, 2024). Then, the electronic device 101 may identify the bending angle of the electronic device 101 (or the flexible display 210) using the bending sensor (e.g., 441). For example, referring to (a), (b), and (c) of FIG. 20, the electronic device 101 may identify that the bending angle of the second sub area 213 of the flexible display 210 gradually increases. For example, in (a) of FIG. 20, at a first time, the electronic device 101 may identify that the first bending angle of the first sub area 212 is a first angle (e.g., 0 degrees) and the second bending angle of the second sub area 213 is the first angle (e.g., 0 degrees). In (b) of FIG. 20, at a second time after the first time, the electronic device 101 may identify that the first bending angle of the first sub area 212 is the first angle (e.g., 0 degrees) and the second bending angle of the second sub area 213 is a second angle (e.g., 20 degrees). In (c) of FIG. 20, at a third time after the second time, the electronic device 101 may identify that the first bending angle of the first sub area 212 is the first angle (e.g., 0 degrees) and the second bending angle of the second sub area 213 is a third angle (e.g., 40 degrees). In (a), (b), and (c) of FIG. 20, as the first bending angle of the first sub area 212 is constantly maintained at the first angle (e.g., 0 degrees), the electronic device 101 may display the objects (e.g., 2011, 2023, 2024) of the first sub area 212 at the same position. In (a), (b), and (c) of FIG. 20, as the second bending angle of the second sub area 213 gradually increases, the electronic device 101 may adjust a display position of the objects (e.g., 2012, 2021, 2022) of the second sub area 213. For example, as the second bending angle of the second sub area 213 gradually increases, the display position of the objects (e.g., 2012, 2021, 2022) of the second sub area 213 may gradually move to the right. As the second bending angle of the second sub area 213 further increases, some of the objects (e.g., 2012, 2021, 2022) of the second sub area 213 may no longer be displayed on the screen.

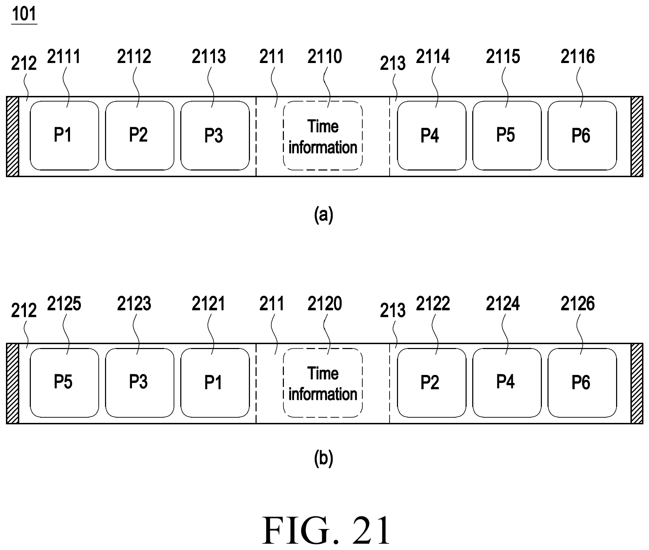

FIG. 21 is a view illustrating an arrangement position of an additional object according to an embodiment.

Referring to FIG. 21, a position (or a priority) where an additional object indicating additional information is disposed may be described. Referring to FIG. 21, when a plurality of additional objects indicating additional information are included in the first state, a position (or a priority) where the additional objects are disposed as the state is switched to the second state may be described. For example, a plurality of additional objects may be disposed in order in a specific direction (e.g., from left to right) in the second state. For example, a plurality of additional objects may be disposed alternately to the left and right with a time object indicating time information as a center in the second state.

According to an embodiment, referring to (a) of FIG. 21, the electronic device 101 may set a priority in a specific direction (e.g., from left to right). For example, the electronic device 101 (e.g., the processor 120) may display a first screen including additional objects (e.g., 1 to 6 additional objects) in the first state, and then display a second screen in the second state based on the state of the electronic device 101 (or the flexible display 210) being switched from the first state to the second state. For example, in (a) of FIG. 21, when one additional object is included in the first state, the electronic device 101 may display the additional object in a first arrangement area 2111 according to the priority in the second state. When there are two additional objects, the additional objects may be sequentially displayed in the first arrangement area 2111 and a second arrangement area 2112 according to the priority. When there are three additional objects, the additional objects may be sequentially displayed in the first arrangement area 2111, the second arrangement area 2112, and a third arrangement area 2113 according to the priority. In this case, no additional object may be disposed in the second sub area 213. When there are four additional objects, the additional objects may be sequentially displayed in the first arrangement area 2111, the second arrangement area 2112, the third arrangement area 2113, and a fourth arrangement area 2114 according to the priority. When there are five additional objects, the additional objects may be sequentially displayed in the first arrangement area 2111, the second arrangement area 2112, the third arrangement area 2113, the fourth arrangement area 2114, and a fifth arrangement area 2115 according to the priority. When there are six additional objects, the additional objects may be sequentially displayed in the first arrangement area 2111, the second arrangement area 2112, the third arrangement area 2113, the fourth arrangement area 2114, the fifth arrangement area 2115, and a sixth arrangement area 2116 according to the priority. According to an embodiment, the priority may be set from right to left.

According to an embodiment, referring to (b) of FIG. 21, the electronic device 101 may set a priority alternately to the left and right with a time object indicating time information as a center. For example, the electronic device 101 (e.g., the processor 120) may display a first screen including additional objects (e.g., 1 to 6 additional objects) in the first state, and then display a second screen in the second state based on the state of the electronic device 101 (or the flexible display 210) being switched from the first state to the second state. For example, in (b) of FIG. 21, when one additional object is included in the first state, the electronic device 101 may display the additional object in a first arrangement area 2121 according to the priority in the second state. When there are two additional objects, the additional objects may be sequentially displayed in the first arrangement area 2121 and a second arrangement area 2122 according to the priority. When there are three additional objects, the additional objects may be sequentially displayed in the first arrangement area 2121, the second arrangement area 2122, and a third arrangement area 2123 according to the priority. When there are four additional objects, the additional objects may be sequentially displayed in the first arrangement area 2121, the second arrangement area 2122, the third arrangement area 2123, and a fourth arrangement area 2124 according to the priority. When there are five additional objects, the additional objects may be sequentially displayed in the first arrangement area 2121, the second arrangement area 2122, the third arrangement area 2123, the fourth arrangement area 2124, and a fifth arrangement area 2125 according to the priority. When there are six additional objects, the additional objects may be sequentially displayed in the first arrangement area 2121, the second arrangement area 2122, the third arrangement area 2123, the fourth arrangement area 2124, the fifth arrangement area 2125, and a sixth arrangement area 2126 according to the priority. According to an embodiment, the priority may be set alternately to the right and left with a time object indicating time information as a center. The method of setting the priority is not limited.

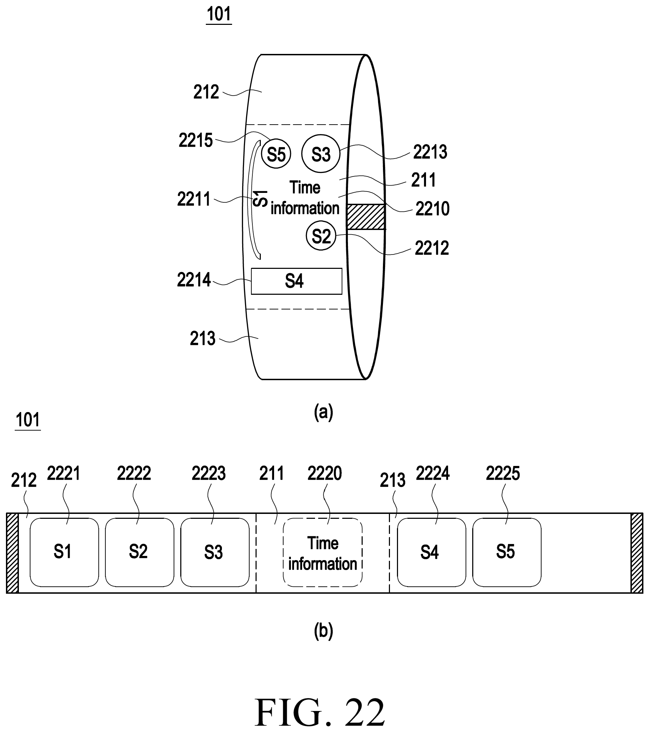

FIG. 22 is a view illustrating an arrangement position of an additional object according to an embodiment.

Referring to FIG. 22, an operation of disposing an additional object of the second state according to an arrangement index of the first state may be described.

For example, referring to FIG. 22, the electronic device 101 (e.g., the processor 120) may display a first screen including a first time object 2210 indicating time information, a first additional object 2211 indicating first additional information, a second additional object 2212 indicating second additional information, a third additional object 2213 indicating third additional information, a fourth additional object 2214 indicating fourth additional information, and a fifth additional object 2215 indicating fifth additional information on the first area 211 in the first state. In the first screen, the first additional object 2211 (e.g., the first additional information), the second additional object 2212 (e.g., the second additional information), the third additional object 2213 (e.g., the third additional information), the fourth additional object 2214 (e.g., the fourth additional information), and the fifth additional object 2215 (e.g., the fifth additional information) may be allocated an index (e.g., a number) in order. The method of assigning an index is not limited. Additional objects may be sequentially disposed in the second screen of the second state according to the index in the first screen. For example, in (b) of FIG. 22, the electronic device 101 may display a sixth additional object 2221 indicating the first additional information corresponding to a first index of the first screen in a first arrangement area according to the priority. The electronic device 101 may display a seventh additional object 2222 indicating the second additional information corresponding to a second index of the first screen in a second arrangement area according to the priority. The electronic device 101 may display an eighth additional object 2223 indicating the third additional information corresponding to a third index of the first screen in a third arrangement area according to the priority. The electronic device 101 may display a ninth additional object 2224 indicating the fourth additional information corresponding to a fourth index of the first screen in a fourth arrangement area according to the priority. The electronic device 101 may display a tenth additional object 2225 indicating the fifth additional information corresponding to a fifth index of the first screen in a fifth arrangement area according to the priority. (b) of FIG. 22 discloses an embodiment in which a priority is set in a specific direction (e.g., from left to right), but the embodiment of FIG. 22 may also be applied to an embodiment in which a priority is set alternately to the left and right (or to the right and left) with a time object indicating time information as a center as illustrated in (b) of FIG. 21, and overlapping descriptions are omitted.

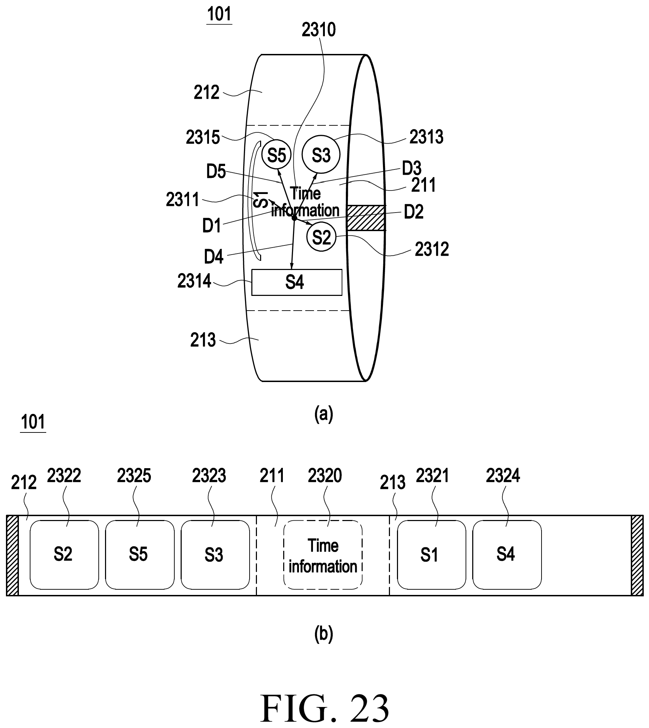

FIG. 23 is a view illustrating an arrangement position of an additional object according to an embodiment.

Referring to FIG. 23, an operation of disposing an additional object of the second state according to an arrangement distance of the first state may be described.

For example, referring to FIG. 23, the electronic device 101 (e.g., the processor 120) may display a first screen including a first time object 2310 indicating time information, a first additional object 2311 indicating first additional information, a second additional object 2312 indicating second additional information, a third additional object 2313 indicating third additional information, a fourth additional object 2314 indicating fourth additional information, and a fifth additional object 2315 indicating fifth additional information on the first area 211 in the first state. The electronic device 101 may identify a first distance (e.g., D1) from a center of the first screen to a center of the first additional object 2311. The electronic device 101 may identify a second distance (e.g., D2) from the center of the first screen to a center of the second additional object 2312. The electronic device 101 may identify a third distance (e.g., D3) from the center of the first screen to a center of the third additional object 2313. The electronic device 101 may identify a fourth distance (e.g., D4) from the center of the first screen to a center of the fourth additional object 2314. The electronic device 101 may identify a fifth distance (e.g., D5) from the center of the first screen to a center of the fifth additional object 2315. The electronic device 101 may compare the magnitudes of the first distance (e.g., D1), the second distance (e.g., D2), the third distance (e.g., D3), the fourth distance (e.g., D4), and the fifth distance (e.g., D5). The electronic device 101 may set a priority of the first additional object 2311 (e.g., the first additional information), the second additional object 2312 (e.g., the second additional information), the third additional object 2313 (e.g., the third additional information), the fourth additional object 2314 (e.g., the fourth additional information), and the fifth additional object 2315 (e.g., the fifth additional information) based on a result of comparing the magnitudes of the first distance (e.g., D1), the second distance (e.g., D2), the third distance (e.g., D3), the fourth distance (e.g., D4), and the fifth distance (e.g., D5). For example, the second distance (e.g., D2) may be the smallest, and the distances may gradually increase in the order of the fifth distance (e.g., D5), the third distance (e.g., D3), the first distance (e.g., D1), and the fourth distance (e.g., D4). Accordingly, the priority may be set in the order of the second additional object 2312 (e.g., the second additional information), the fifth additional object 2315 (e.g., the fifth additional information), the third additional object 2313 (e.g., the third additional information), the first additional object 2311 (e.g., the first additional information), and the fourth additional object 2314 (e.g., the fourth additional information). In (b) of FIG. 23, the electronic device 101 may display a second screen including the additional objects (e.g., 2322, 2325, 2323, 2321, 2324) according to the priority. (b) of FIG. 23 is an embodiment in which a priority is set in a specific direction (e.g., from left to right) in the second screen of the second state, and a sixth additional object 2322 indicating the second additional information, a seventh additional object 2325 indicating the fifth additional information, an eighth additional object 2326 indicating the third additional information, a ninth additional object 2321 indicating the first additional information, and a tenth additional object 2324 indicating the fourth additional information may be sequentially displayed on the second screen based on the priority set according to the distance of the first screen of the first state. (b) of FIG. 23 discloses an embodiment in which a priority is set in a specific direction (e.g., from left to right), but the embodiment of FIG. 23 may also be applied to an embodiment in which a priority is set alternately to the left and right (or to the right and left) with a time object indicating time information as a center as illustrated in (b) of FIG. 21, and overlapping descriptions are omitted.

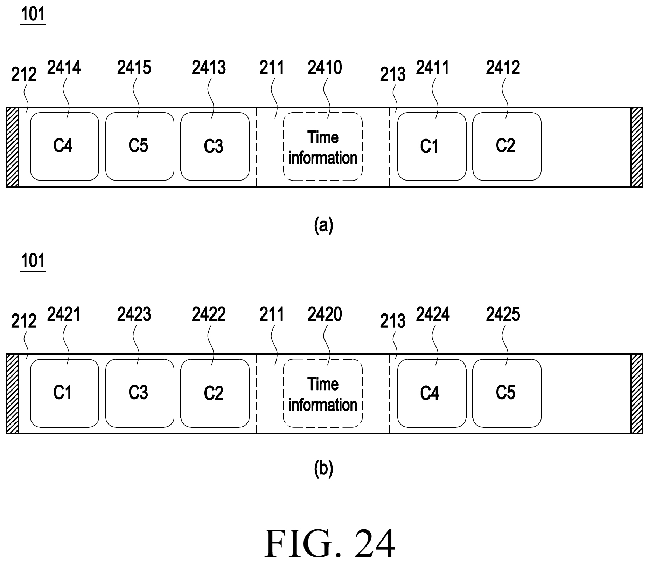

FIG. 24 is a view illustrating a priority of arrangement of an additional object according to an embodiment.

Referring to (a) of FIG. 24, an operation of assigning a priority according to the number of executions of an application corresponding to additional information may be described. Referring to (b) of FIG. 24, an operation of assigning a priority according to the number of categories of additional information may be described.

For example, the electronic device 101 (e.g., the processor 120) may display a first screen including a first time object indicating time information, a first additional object indicating first additional information, a second additional object indicating second additional information, a third additional object indicating third additional information, a fourth additional object indicating fourth additional information, and a fifth additional object indicating fifth additional information in the first state. Then, the electronic device 101 may display the second screen of (a) of FIG. 24 according to the priority corresponding to the number of executions of an application, or display the third screen of (b) of FIG. 24 according to the priority corresponding to the number of categories of additional information.

For example, when assigning a priority according to the number of executions of an application, the electronic device 101 may set a priority according to the number of executions of an application among the first additional object (e.g., the first additional information), the second additional object (e.g., the second additional information), the third additional object (e.g., the third additional information), the fourth additional object (e.g., the fourth additional information), and the fifth additional object (e.g., the fifth additional information) included in the first screen. For example, when the number of executions of an application corresponding to the fourth additional information is the largest and the number of executions of an application is identified in the order of the fifth additional information, the third additional information, the first additional information, and the second additional information, the electronic device 101 may set a priority in the order of the fourth additional object (e.g., the fourth additional information), the fifth additional object (e.g., the fifth additional information), the third additional object (e.g., the third additional information), the first additional object (e.g., the first additional information), and the second additional object (e.g., the second additional information). Accordingly, the electronic device 101 may display the second screen including the additional objects 2414, 2415, 2413, 2411, 2412 according to the priority based on the state of the electronic device 101 (or the flexible display 210) being switched from the first state to the second state. For example, a sixth additional object 2414 indicating the fourth additional information, a seventh additional object 2415 indicating the fifth additional information, an eighth additional object 2413 indicating the third additional information, a ninth additional object 2411 indicating the first additional information, and a tenth additional object 2412 indicating the fourth additional information may be sequentially displayed on the second screen.

For example, when assigning a priority according to the number of categories of additional information, the electronic device 101 may set a priority according to the number of categories of additional information among the first additional object (e.g., the first additional information), the second additional object (e.g., the second additional information), the third additional object (e.g., the third additional information), the fourth additional object (e.g., the fourth additional information), and the fifth additional object (e.g., the fifth additional information) included in the first screen. For example, the first additional information and the third additional information are additional information of a first type (e.g., exercise), and the number of categories corresponding to the first additional information and the third additional information is 2, the second additional information and the fourth additional information are additional information of a second type (e.g., time), and the number of categories corresponding to the second additional information and the fourth additional information is 2, and the fifth additional information is additional information of a third type (e.g., weather), and the number of categories corresponding to the fifth additional information may be 1. In this case, a priority may be allocated in order of the number of categories. When the number of categories is the same, a priority may be allocated according to a designated order. Accordingly, the electronic device 101 may display the second screen including the additional objects 2421, 2423, 2422, 2424, 2425 according to the priority based on the state of the electronic device 101 (or the flexible display 210) being switched from the first state to the second state. For example, an eleventh additional object 2421 indicating the first additional information, a twelfth additional object 2423 indicating the third additional information, a thirteenth additional object 2422 indicating the second additional information, a fourteenth additional object 2424 indicating the fourth additional information, and a fifteenth additional object 2425 indicating the fifth additional information may be sequentially displayed on the second screen. (a) and (b) of FIG. 24 disclose an embodiment in which a priority is set in a specific direction (e.g., from left to right), but the embodiment of FIG. 24 may also be applied to an embodiment in which a priority is set alternately to the left and right (or to the right and left) with a time object indicating time information as a center as illustrated in (b) of FIG. 21, and overlapping descriptions are omitted.

According to an embodiment, a priority may be set according to a shape of an object. For example, a priority may be set in the order of a circular shape, a small box shape, a medium box shape, a large box shape, a bar shape, and an edge shape, but this is merely an example, and the priority according to a shape of an object is not limited thereto. For example, the electronic device 101 may set a priority according to a shape of an object among the first additional object (e.g., the first additional information), the second additional object (e.g., the second additional information), the third additional object (e.g., the third additional information), the fourth additional object (e.g., the fourth additional information), and the fifth additional object (e.g., the fifth additional information) included in the first screen. For example, when the priority of a shape of an object corresponding to the fourth additional information is the highest and a priority is identified according to a shape of an object in the order of the fifth additional information, the third additional information, the first additional information, and the second additional information, the electronic device 101 may set a priority in the order of the fourth additional object (e.g., the fourth additional information), the fifth additional object (e.g., the fifth additional information), the third additional object (e.g., the third additional information), the first additional object (e.g., the first additional information), and the second additional object (e.g., the second additional information). Accordingly, the electronic device 101 may display the second screen including the additional objects according to the priority based on the state of the electronic device 101 (or the flexible display 210) being switched from the first state to the second state. For example, a sixth additional object indicating the fourth additional information, a seventh additional object indicating the fifth additional information, an eighth additional object indicating the third additional information, a ninth additional object indicating the first additional information, and a tenth additional object indicating the fourth additional information may be sequentially displayed on the second screen.

According to an embodiment, a priority may be set in order of a size of an area occupied by an additional object displayed in the first screen. For example, the electronic device 101 may set a priority in order of a size of an area occupied by an object among the first additional object (e.g., the first additional information), the second additional object (e.g., the second additional information), the third additional object (e.g., the third additional information), the fourth additional object (e.g., the fourth additional information), and the fifth additional object (e.g., the fifth additional information) included in the first screen. For example, when a size of an area occupied by the fourth additional object corresponding to the fourth additional information is the largest and a priority is identified according to a size of an area occupied by an object in the order of the fifth additional information, the third additional information, the first additional information, and the second additional information, the electronic device 101 may set a priority in the order of the fourth additional object (e.g., the fourth additional information), the fifth additional object (e.g., the fifth additional information), the third additional object (e.g., the third additional information), the first additional object (e.g., the first additional information), and the second additional object (e.g., the second additional information). Accordingly, the electronic device 101 may display the second screen including the additional objects according to the priority based on the state of the electronic device 101 (or the flexible display 210) being switched from the first state to the second state. For example, a sixth additional object indicating the fourth additional information, a seventh additional object indicating the fifth additional information, an eighth additional object indicating the third additional information, a ninth additional object indicating the first additional information, and a tenth additional object indicating the fourth additional information may be sequentially displayed on the second screen.

Those skilled in the art may understand that the embodiments described in this specification may be applied to each other within an applicable range. For example, it will be understood by one of ordinary skill in the art that at least some operations of an embodiment described in the disclosure may be omitted and applied, or at least some operations of an embodiment may be applied in connection with each other.

Technical objects to be achieved herein are not limited to the foregoing technical objects, and other technical objects not mentioned may be clearly understood by those skilled in the art from the following description.

Effects obtainable from the disclosure are not limited to the above-mentioned effects, and other effects not mentioned may be clearly understood by those skilled in the art from the following description.

According to an embodiment, a wearable electronic device 101 may include a housing 200 including a first housing 201 and a second housing 202 extending from the first housing 201. At least a portion of the second housing 202 may be flexible. The wearable electronic device 101 may include a display 160, 210 disposed in the housing 200, at least one processor 120, and memory 130 storing instructions. The instructions, when executed by the at least one processor 120, may cause the wearable electronic device 101 to display, among a first area and a second area of the display 160, 210, a screen in a portrait orientation on the first area without displaying a screen on the second area extending from the first area. The instructions, when executed by the at least one processor 120, may cause the wearable electronic device 101 to display a screen in the portrait orientation on the first area and the second area of the display 160, 210. The instructions, when executed by the at least one processor 120, may cause the wearable electronic device 101 to display a screen in a landscape orientation on the first area of the display 160, 210 without displaying a screen on the second area of the display 160, 210. The instructions, when executed by the at least one processor 120, may cause the wearable electronic device 101 to display a screen in the landscape orientation on the first area and the second area of the display 160, 210. At least a portion of the first area of the display 160, 210 may correspond to the first housing 201. At least a portion of the second area of the display 160, 210 may correspond to the second housing 202.

According to an embodiment, the wearable electronic device 101 may be a smart watch. The first housing 201 may be a main body 201 of the wearable electronic device 101. The second housing 202 may be a strap 202 of the wearable electronic device 101. The wearable electronic device 101 may include at least one sensor 176, 441; 442; 443; 444; 445; 446. The instructions, when executed by the at least one processor 120, may cause the wearable electronic device 101 to identify, via the at least one sensor 176, 441; 442; 443; 444; 445; 446, a state of the wearable electronic device 101 related to whether the wearable electronic device 101 is worn on a wrist of a user. The instructions, when executed by the at least one processor 120, may cause the wearable electronic device 101 to display a screen on the display based on the state being identified as a first state or a second state. The first state may be a state in which the wearable electronic device 101 is worn on the wrist of the user. The second state may be a state in which the wearable electronic device 101 is not worn on the wrist of the user. The instructions, when executed by the at least one processor 120, may cause the wearable electronic device 101 to display, based on the first state and a user setting, the screen in the portrait orientation on the first area of the display 160, 210 without displaying a screen on the second area of the display 160, 210. The instructions, when executed by the at least one processor 120, may cause the wearable electronic device 101 to display, based on the first state and the user setting, the screen in the portrait orientation on the first area and the second area of the display 160, 210. The instructions, when executed by the at least one processor 120, may cause the wearable electronic device 101 to display, based on the second state and the user setting, the screen in the landscape orientation on the first area of the display 160, 210 without displaying a screen on the second area of the display 160, 210. The instructions, when executed by the at least one processor 120, may cause the wearable electronic device 101 to display, based on the second state and the user setting, the screen in the landscape orientation on the first area and the second area of the display 160, 210.

According to an embodiment, the strap 202 may include a first strap 203 extending from a first end of the main body 201 and a second strap 204 extending from a second end of the main body 201. The second area may include a first sub area extending from a first end of the first area and a second sub area extending from a second end of the first area. At least a portion of the first sub area may correspond to the first strap 203. At least a portion of the second sub area may correspond to the second strap 204.

According to an embodiment, the instructions, when executed by the at least one processor 120, may cause the wearable electronic device 101 to display, on the first area of the display 160, 210, a first screen including a first time object indicating time information and a first additional object indicating first additional information, based on the state being identified as the first state of the wearable electronic device 101. The instructions, when executed by the at least one processor 120, may cause the wearable electronic device 101 to display, on the display 160, 210, a second screen including a second time object indicating the time information and a second additional object indicating the first additional information, based on identifying that the state of the wearable electronic device 101 is switched from the first state to the second state while displaying the first screen. The second time object of the second screen may be displayed on the first area of the display 160, 210, and the second additional object of the second screen may be displayed on the second area of the display 160, 210.

According to an embodiment, the instructions, when executed by the at least one processor 120, may cause the wearable electronic device 101 to display a first list for selecting other additional information, based on a first user input for the second additional object while displaying the second screen. The instructions, when executed by the at least one processor 120, may cause the wearable electronic device 101 to replace the second additional object with a third additional object in the second screen, based on a second user input for selecting the third additional object from among at least one additional object included in the first list. The third additional object may indicate second additional information different from the first additional information corresponding to the first additional object and the second additional object.

According to an embodiment, the instructions, when executed by the at least one processor 120, may cause the wearable electronic device 101 to display, on the first area of the display 160, 210, a third screen including the first time object indicating the time information and a fourth additional object indicating the second additional information, based on identifying that the state of the wearable electronic device 101 is switched from the second state to the first state while displaying the second screen including the second time object and the third additional object.

According to an embodiment, the at least one sensor 176, 441; 442; 443; 444; 445; 446 may include a bending sensor 176, 441, a biometric sensor 176, 442, an optical sensor 176, 443, a binding sensor 176, 444, an acceleration sensor 176, 445, or a gyro sensor 176, 446. The instructions, when executed by the at least one processor 120, may cause the wearable electronic device 101 to identify the first state based on identifying that a bending angle of the display 160, 210 is greater than or equal to a reference value using the bending sensor 176, 441. The instructions, when executed by the at least one processor 120, may cause the wearable electronic device 101 to identify the first state based on identifying a biometric signal of the user using the biometric sensor 176, 442. The instructions, when executed by the at least one processor 120, may cause the wearable electronic device 101 to identify the first state based on identifying proximity of the wearable electronic device 101 and the user using the optical sensor 176, 443. The instructions, when executed by the at least one processor 120, may cause the wearable electronic device 101 to identify the first state based on identifying a binding of a binding portion of the wearable electronic device 101 using the binding sensor 176, 444. The instructions, when executed by the at least one processor 120, may cause the wearable electronic device 101 to identify the first state based on identifying movement of the wearable electronic device 101 using the acceleration sensor 176, 445 or the gyro sensor 176, 446.

According to an embodiment, the first additional information may include at least one of weather information, date information, schedule information, location information, step count information, heart rate information, or battery information.

According to an embodiment, the first additional object indicating the first additional information in the first screen may indicate simple information of the first additional information. The second additional object indicating the first additional information in the second screen may indicate detailed information of the first additional information.

According to an embodiment, the second additional object may include a first object indicating the detailed information and a second object indicating a shape of an object corresponding to the first additional information.

According to an embodiment, the shape may include one of a circular shape, an arc shape, a bar shape, or a box shape. The instructions, when executed by the at least one processor 120, may cause the wearable electronic device 101 to display a second list for selecting other additional information that is displayable in the shape corresponding to the second object, based on a third user input for the first object or a fourth user input for the second object.

According to an embodiment, the first screen may include the first time object indicating the time information, the first additional object indicating the first additional information, and a fifth additional object indicating second additional information. The second screen may include the second time object indicating the time information, the second additional object indicating the first additional information, and a sixth additional object indicating the second additional information. The second additional object in the second screen may be displayed on the first sub area. The sixth additional object in the second screen may be displayed on the second sub area.

According to an embodiment, the at least one sensor 176, 441; 442; 443; 444; 445; 446 may include a bending sensor 176, 441. The instructions, when executed by the at least one processor 120, may cause the wearable electronic device 101 to identify a bending angle of the display 160, 210 using the bending sensor 176, 441. The instructions, when executed by the at least one processor 120, may cause the wearable electronic device 101 to set a brightness of the first sub area to a first brightness based on a first bending angle of the first sub area of the display 160, 210 being a first angle. The instructions, when executed by the at least one processor 120, may cause the wearable electronic device 101 to set a brightness of the second sub area to a second brightness based on a second bending angle of the second sub area of the display 160, 210 being a second angle. The instructions, when executed by the at least one processor 120, may cause the wearable electronic device 101 to set the brightness of the second sub area to a third brightness based on the second bending angle of the second sub area of the display 160, 210 being a third angle. The first angle may be smaller than the second angle. The second angle may be smaller than the third angle. The first brightness may be brighter than the second brightness. The second brightness may be brighter than the third brightness.

According to an embodiment, a method of operating a wearable electronic device 101 may include performing one operation among an operation of displaying, among a first area and a second area of a display 160, 210 of the wearable electronic device 101, a screen in a portrait orientation on the first area without displaying a screen on the second area extending from the first area, an operation of displaying a screen in the portrait orientation on the first area and the second area of the display 160, 210, an operation of displaying a screen in a landscape orientation on the first area of the display 160, 210 without displaying a screen on the second area of the display 160, 210, or an operation of displaying a screen in the landscape orientation on the first area and the second area of the display 160, 210. At least a portion of the first area of the display 160, 210 may correspond to a first housing 201 of the wearable electronic device 101. At least a portion of the second area of the display 160, 210 may correspond to a second housing 202 extending from the first housing 201. At least a portion of the second housing 202 may be flexible.

According to an embodiment, the method may include identifying, via at least one sensor 176, 441; 442; 443; 444; 445; 446 of the wearable electronic device 101, a state of the wearable electronic device 101 related to whether the wearable electronic device 101 is worn on a wrist of a user. The method may include displaying a screen on the display based on the state being identified as a first state or a second state. The first state may be a state in which the wearable electronic device 101 is worn on the wrist of the user. The second state may be a state in which the wearable electronic device 101 is not worn on the wrist of the user. The operation of displaying the screen on the display may include performing one operation among an operation of displaying, based on the first state and a user setting, the screen in the portrait orientation on the first area of the display 160, 210 without displaying a screen on the second area of the display 160, 210, an operation of displaying, based on the first state and the user setting, the screen in the portrait orientation on the first area and the second area of the display 160, 210, an operation of displaying, based on the second state and the user setting, the screen in the landscape orientation on the first area of the display 160, 210 without displaying a screen on the second area of the display 160, 210, or an operation of displaying, based on the second state and the user setting, the screen in the landscape orientation on the first area and the second area of the display 160, 210.

According to an embodiment, the method may include displaying, on the first area of the flexible display 160, 210, a first screen including a first time object indicating time information and a first additional object indicating first additional information, based on identifying the state as the first state of the wearable electronic device 101. The method may include displaying, on the flexible display 160, 210, a second screen including a second time object indicating the time information and a second additional object indicating the first additional information, based on identifying that the state of the wearable electronic device 101 is switched from the first state to the second state while displaying the first screen. The second time object of the second screen may be displayed on the first area of the display 160, 210, and the second additional object of the second screen may be displayed on the second area of the display 160, 210.

According to an embodiment, the method may include displaying a first list for selecting other additional information, based on a first user input for the second additional object while displaying the second screen. The method may include replacing the second additional object with a third additional object in the second screen, based on a second user input for selecting the third additional object from among at least one additional object included in the first list. The third additional object may indicate second additional information different from the first additional information corresponding to the first additional object and the second additional object.

According to an embodiment, the method may include displaying, on the first area of the display 160, 210, a third screen including the first time object indicating the time information and a fourth additional object indicating the second additional information, based on identifying that the state of the wearable electronic device 101 is switched from the second state to the first state while displaying the second screen including the second time object and the third additional object.

According to an embodiment, the method may include identifying the first state based on identifying that a bending angle of the display 160, 210 is greater than or equal to a reference value using a bending sensor 176, 441. The method may include identifying the first state based on identifying a biometric signal of the user using a biometric sensor 176, 442. The method may include identifying the first state based on identifying proximity of the wearable electronic device 101 and the user using an optical sensor 176, 443. The method may include identifying the first state based on identifying a binding of a binding portion of the wearable electronic device 101 using a binding sensor 176, 444. The method may include identifying the first state based on identifying movement of the wearable electronic device 101 using an acceleration sensor 176, 445 or a gyro sensor 176, 446.

According to an embodiment, in the method, the first additional information may include at least one of weather information, date information, schedule information, location information, step count information, heart rate information, or battery information.

According to an embodiment, in the method, the first additional object indicating the first additional information in the first screen may indicate simple information of the first additional information. The second additional object indicating the first additional information in the second screen may indicate detailed information of the first additional information.

According to an embodiment, in the method, the second additional object may include a first object indicating the detailed information and a second object indicating a shape of an object corresponding to the first additional information.

According to an embodiment, in the method, the shape may include one of a circular shape, an arc shape, a bar shape, or a box shape. The method may include displaying a second list for selecting other additional information that is displayable in the shape corresponding to the second object, based on a third user input for the first object or a fourth user input for the second object.

According to an embodiment, in the method, the first screen may include the first time object indicating the time information, the first additional object indicating the first additional information, and a fifth additional object indicating second additional information. The second screen may include the second time object indicating the time information, the second additional object indicating the first additional information, and a sixth additional object indicating the second additional information. The second additional object in the second screen may be displayed on the first sub area. The sixth additional object in the second screen may be displayed on the second sub area.

According to an embodiment, the method may include identifying a bending angle of the display 160, 210 using a bending sensor 176, 441. The method may include setting a brightness of the first sub area to a first brightness based on a first bending angle of the first sub area of the display 160, 210 being a first angle. The method may include setting a brightness of the second sub area to a second brightness based on a second bending angle of the second sub area of the display 160, 210 being a second angle. The method may include setting the brightness of the second sub area to a third brightness based on the second bending angle of the second sub area of the display 160, 210 being a third angle. The first angle may be smaller than the second angle. The second angle may be smaller than the third angle. The first brightness may be brighter than the second brightness. The second brightness may be brighter than the third brightness.

According to an embodiment, a storage medium stores computer-readable instructions that, when executed by at least one processor 120 of a wearable electronic device 101, may cause the wearable electronic device 101 to perform at least one operation. The at least one operation may include performing one operation among an operation of displaying, among a first area and a second area of a display 160, 210 of the wearable electronic device 101, a screen in a portrait orientation on the first area without displaying a screen on the second area extending from the first area, an operation of displaying a screen in the portrait orientation on the first area and the second area of the display 160, 210, an operation of displaying a screen in a landscape orientation on the first area of the display 160, 210 without displaying a screen on the second area of the display 160, 210, or an operation of displaying a screen in the landscape orientation on the first area and the second area of the display 160, 210. At least a portion of the first area of the display 160, 210 may correspond to a first housing 201 of the wearable electronic device 101. At least a portion of the second area of the display 160, 210 may correspond to a second housing 202 extending from the first housing 201. At least a portion of the second housing 202 may be flexible.

According to an embodiment, the at least one operation may include identifying, via at least one sensor 176, 441; 442; 443; 444; 445; 446 of the wearable electronic device 101, a state of the wearable electronic device 101 related to whether the wearable electronic device 101 is worn on a wrist of a user. The at least one operation may include displaying a screen on the display based on the state being identified as a first state or a second state. The first state may be a state in which the wearable electronic device 101 is worn on the wrist of the user. The second state may be a state in which the wearable electronic device 101 is not worn on the wrist of the user. The operation of displaying the screen on the display may include performing one operation among an operation of displaying, based on the first state and a user setting, the screen in the portrait orientation on the first area of the display 160, 210 without displaying a screen on the second area of the display 160, 210, an operation of displaying, based on the first state and the user setting, the screen in the portrait orientation on the first area and the second area of the display 160, 210, an operation of displaying, based on the second state and the user setting, the screen in the landscape orientation on the first area of the display 160, 210 without displaying a screen on the second area of the display 160, 210, or an operation of displaying, based on the second state and the user setting, the screen in the landscape orientation on the first area and the second area of the display 160, 210.

According to an embodiment, the at least one operation may include displaying, on the first area of the flexible display 160, 210, a first screen including a first time object indicating time information and a first additional object indicating first additional information, based on identifying the state as the first state of the wearable electronic device 101. The at least one operation may include displaying, on the flexible display 160, 210, a second screen including a second time object indicating the time information and a second additional object indicating the first additional information, based on identifying that the state of the wearable electronic device 101 is switched from the first state to the second state while displaying the first screen. The second time object of the second screen may be displayed on the first area of the display 160, 210, and the second additional object of the second screen may be displayed on the second area of the display 160, 210.

According to an embodiment, the at least one operation may include displaying a first list for selecting other additional information, based on a first user input for the second additional object while displaying the second screen. The at least one operation may include replacing the second additional object with a third additional object in the second screen, based on a second user input for selecting the third additional object from among at least one additional object included in the first list. The third additional object may indicate second additional information different from the first additional information corresponding to the first additional object and the second additional object.

According to an embodiment, the at least one operation may include displaying, on the first area of the display 160, 210, a third screen including the first time object indicating the time information and a fourth additional object indicating the second additional information, based on identifying that the state of the wearable electronic device 101 is switched from the second state to the first state while displaying the second screen including the second time object and the third additional object.

According to an embodiment, the at least one operation may include identifying the first state based on identifying that a bending angle of the display 160, 210 is greater than or equal to a reference value using a bending sensor 176, 441. The at least one operation may include identifying the first state based on identifying a biometric signal of the user using a biometric sensor 176, 442. The at least one operation may include identifying the first state based on identifying proximity of the wearable electronic device 101 and the user using an optical sensor 176, 443. The at least one operation may include identifying the first state based on identifying a binding of a binding portion of the wearable electronic device 101 using a binding sensor 176, 444. The at least one operation may include identifying the first state based on identifying movement of the wearable electronic device 101 using an acceleration sensor 176, 445 or a gyro sensor 176, 446.

According to an embodiment, in the storage medium, the first additional information may include at least one of weather information, date information, schedule information, location information, step count information, heart rate information, or battery information.

According to an embodiment, in the storage medium, the first additional object indicating the first additional information in the first screen may indicate simple information of the first additional information. The second additional object indicating the first additional information in the second screen may indicate detailed information of the first additional information.

According to an embodiment, in the storage medium, the second additional object may include a first object indicating the detailed information and a second object indicating a shape of an object corresponding to the first additional information.

According to an embodiment, in the storage medium, the shape may include one of a circular shape, an arc shape, a bar shape, or a box shape. The at least one operation may include displaying a second list for selecting other additional information that is displayable in the shape corresponding to the second object, based on a third user input for the first object or a fourth user input for the second object.

According to an embodiment, in the storage medium, the first screen may include the first time object indicating the time information, the first additional object indicating the first additional information, and a fifth additional object indicating second additional information. The second screen may include the second time object indicating the time information, the second additional object indicating the first additional information, and a sixth additional object indicating the second additional information. The second additional object in the second screen may be displayed on the first sub area. The sixth additional object in the second screen may be displayed on the second sub area.

According to an embodiment, the at least one operation may include identifying a bending angle of the display 160, 210 using a bending sensor 176, 441. The at least one operation may include setting a brightness of the first sub area to a first brightness based on a first bending angle of the first sub area of the display 160, 210 being a first angle. The at least one operation may include setting a brightness of the second sub area to a second brightness based on a second bending angle of the second sub area of the display 160, 210 being a second angle. The at least one operation may include setting the brightness of the second sub area to a third brightness based on the second bending angle of the second sub area of the display 160, 210 being a third angle. The first angle may be smaller than the second angle. The second angle may be smaller than the third angle. The first brightness may be brighter than the second brightness. The second brightness may be brighter than the third brightness.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program) including one or more instructions that are stored in a storage medium that is readable by a machine (e.g., an electronic device). For example, a processor (e.g., a controller) of the machine may invoke at least one of the one or more instructions stored in the storage medium, and execute it. This allows the machine to be operated to perform at least one function according to the at least one instruction invoked. The one or more instructions may include a code generated by a compiler or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A wearable electronic device (101) comprising:
a housing (200) including a first housing (201) and a second housing (202) extending from the first housing (201), wherein at least a portion of the second housing (202) is flexible;
a display (160; 210) disposed in the housing (200);
at least one processor (120); and
memory (130) storing instructions that, when executed by the at least one processor (120), cause the wearable electronic device (101) to:
display, among a first area and a second area of the display (160; 210), a screen in a portrait orientation on the first area without displaying a screen on the second area extending from the first area;
display a screen in the portrait orientation on the first area and the second area of the display (160; 210);
display a screen in a landscape orientation on the first area of the display (160; 210) without displaying a screen on the second area of the display (160; 210); or
display a screen in the landscape orientation on the first area and the second area of the display (160; 210),
wherein at least a portion of the first area of the display (160; 210) corresponds to the first housing (201), and
wherein at least a portion of the second area of the display (160; 210) corresponds to the second housing (202).

2. The wearable electronic device (101) of claim 1, wherein the wearable electronic device (101) is a smart watch, the first housing (201) is a main body (201) of the wearable electronic device (101), and the second housing (202) is a strap (202) of the wearable electronic device (101), and
wherein the wearable electronic device (101) further includes at least one sensor (176; 441; 442; 443; 444; 445; 446),
wherein the instructions, when executed by the at least one processor (120), cause the wearable electronic device (101) to:
identify, via the at least one sensor (176; 441; 442; 443; 444; 445; 446), a state of the wearable electronic device (101) related to whether the wearable electronic device (101) is worn on a wrist of a user; and
display a screen on the display based on the state being identified as a first state or a second state, wherein the first state is a state in which the wearable electronic device (101) is worn on the wrist of the user, and the second state is a state in which the wearable electronic device (101) is not worn on the wrist of the user, and
wherein the instructions, when executed by the at least one processor (120), cause the wearable electronic device (101) to:
display, based on the first state and a user setting, the screen in the portrait orientation on the first area of the display (160; 210) without displaying a screen on the second area of the display (160; 210);
display, based on the first state and the user setting, the screen in the portrait orientation on the first area and the second area of the display (160; 210);
display, based on the second state and the user setting, the screen in the landscape orientation on the first area of the display (160; 210) without displaying a screen on the second area of the display (160; 210); or
display, based on the second state and the user setting, the screen in the landscape orientation on the first area and the second area of the display (160; 210).

3. The wearable electronic device (101) of claim 1 or 2, wherein the strap (202) includes a first strap (203) extending from a first end of the main body (201), and a second strap (204) extending from a second end of the main body (201),
wherein the second area includes a first sub area extending from a first end of the first area and a second sub area extending from a second end of the first area,
wherein at least a portion of the first sub area corresponds to the first strap (203), and
wherein at least a portion of the second sub area corresponds to the second strap (204).

4. The wearable electronic device (101) of any one of claims 1 to 3, wherein the instructions, when executed by the at least one processor (120), cause the wearable electronic device (101) to:
display, on the first area of the display (160; 210), a first screen including a first time object indicating time information and a first additional object indicating first additional information, based on the state being identified as the first state of the wearable electronic device (101); and
display, on the display (160; 210), a second screen including a second time object indicating the time information and a second additional object indicating the first additional information, based on identifying that the state of the wearable electronic device (101) is switched from the first state to the second state while displaying the first screen,
wherein the second time object of the second screen is displayed on the first area of the display (160; 210), and the second additional object of the second screen is displayed on the second area of the display (160; 210).

5. The wearable electronic device (101) of any one of claims 1 to 4, wherein the instructions, when executed by the at least one processor (120), cause the wearable electronic device (101) to:
display a first list for selecting other additional information, based on a first user input for the second additional object while displaying the second screen; and
replace the second additional object with a third additional object in the second screen, based on a second user input for selecting the third additional object from among at least one additional object included in the first list,
wherein the third additional object indicates second additional information different from the first additional information that corresponds to the first additional object and the second additional object.

6. The wearable electronic device (101) of any one of claims 1 to 5, wherein the instructions, when executed by the at least one processor (120), cause the wearable electronic device (101) to:
display, on the first area of the display (160; 210), a third screen including the first time object indicating the time information and a fourth additional object indicating the second additional information, based on identifying that the state of the wearable electronic device (101) is switched from the second state to the first state while displaying the second screen including the second time object and the third additional object.

7. The wearable electronic device (101) of any one of claims 1 to 6, wherein the at least one sensor (176; 441; 442; 443; 444; 445; 446) includes a bending sensor (176; 441), a biometric sensor (176; 442), an optical sensor (176; 443), a binding sensor (176; 444), an acceleration sensor (176; 445), or a gyro sensor (176; 446), and
wherein the instructions, when executed by the at least one processor (120), cause the wearable electronic device (101) to:
identify the first state based on identifying that a bending angle of the display (160; 210) is greater than or equal to a reference value using the bending sensor (176; 441);
identify the first state based on identifying a biometric signal of the user using the biometric sensor (176; 442);
identify the first state based on identifying proximity of the wearable electronic device (101) and the user using the optical sensor (176; 443);
identify the first state based on identifying a binding of a binding portion of the wearable electronic device (101) using the binding sensor (176; 444); or
identify the first state based on identifying movement of the wearable electronic device (101) using the acceleration sensor (176; 445) or the gyro sensor (176; 446).

8. The wearable electronic device (101) of any one of claims 1 to 7, wherein the first additional information includes at least one of weather information, date information, schedule information, location information, step count information, heart rate information, or battery information.

9. The wearable electronic device (101) of any one of claims 1 to 8, wherein the first additional object indicating the first additional information in the first screen indicates simple information of the first additional information, and
wherein the second additional object indicating the first additional information in the second screen indicates detailed information of the first additional information.

10. The wearable electronic device (101) of any one of claims 1 to 9, wherein the second additional object includes a first object indicating the detailed information and a second object indicating a shape of an object corresponding to the first additional information.

11. The wearable electronic device (101) of any one of claims 1 to 10, wherein the shape includes one of a circular shape, an arc shape, a bar shape, or a box shape, and
wherein the instructions, when executed by the at least one processor (120), cause the wearable electronic device (101) to display a second list for selecting other additional information that is displayable in the shape corresponding to the second object, based on a third user input for the first object or a fourth user input for the second object.

12. The wearable electronic device (101) of any one of claims 1 to 11, wherein the first screen includes the first time object indicating the time information, the first additional object indicating the first additional information, and a fifth additional object indicating second additional information,
wherein the second screen includes the second time object indicating the time information, the second additional object indicating the first additional information, and a sixth additional object indicating the second additional information,
wherein the second additional object in the second screen is displayed on the first sub area, and
wherein the sixth additional object in the second screen is displayed on the second sub area.

13. The wearable electronic device (101) of any one of claims 1 to 12, wherein the at least one sensor (176; 441; 442; 443; 444; 445; 446) includes a bending sensor (176; 441),
wherein the instructions, when executed by the at least one processor (120), cause the wearable electronic device (101) to:
identify a bending angle of the display (160; 210) using the bending sensor (176; 441);
set a brightness of the first sub area to a first brightness based on a first bending angle of the first sub area of the display (160; 210) being a first angle;
set a brightness of the second sub area to a second brightness based on a second bending angle of the second sub area of the display (160; 210) being a second angle; and
set the brightness of the second sub area to a third brightness based on the second bending angle of the second sub area of the display (160; 210) being a third angle,
wherein the first angle is smaller than the second angle,
wherein the second angle is smaller than the third angle,
wherein the first brightness is brighter than the second brightness, and
wherein the second brightness is brighter than the third brightness.

14. A method of operating a wearable electronic device (101), the method comprising:
performing one operation among an operation of displaying, among a first area and a second area of a display (160; 210) of the wearable electronic device (101), a screen in a portrait orientation on the first area without displaying a screen on the second area extending from the first area,
an operation of displaying a screen in the portrait orientation on the first area and the second area of the display (160; 210),
an operation of displaying a screen in a landscape orientation on the first area of the display (160; 210) without displaying a screen on the second area of the display (160; 210), or
an operation of displaying a screen in the landscape orientation on the first area and the second area of the display (160; 210), wherein
at least a portion of the first area of the display (160; 210) corresponds to a first housing (201) of the wearable electronic device (101),
wherein at least a portion of the second area of the display (160; 210) corresponds to a second housing (202) extending from the first housing (201), and
wherein at least a portion of the second housing (202) is flexible.

15. A storage medium storing computer-readable instructions that, when executed by at least one processor (120) of a wearable electronic device (101), cause the wearable electronic device (101) to perform at least one operation,
wherein the at least one operation includes performing one operation among an operation of displaying, among a first area and a second area of a display (160; 210) of the wearable electronic device (101), a screen in a portrait orientation on the first area without displaying a screen on the second area extending from the first area,
an operation of displaying a screen in the portrait orientation on the first area and the second area of the display (160; 210),
an operation of displaying a screen in a landscape orientation on the first area of the display (160; 210) without displaying a screen on the second area of the display (160; 210), or
an operation of displaying a screen in the landscape orientation on the first area and the second area of the display (160; 210).
